# EUROPEAN PATENT APPLICATION

(11) **EP 4 412 389 A1**
(43) Date of publication of application: **07.08.2024**
(21) Application number: 22876065.8
(22) Date of filing: 22.09.2022
(51) Int. Cl.: H04W 76/18, H04W 12/06, H04W 76/11, H04W 88/14

(54) **FIRST NODE, SECOND NODE, METHOD EMPLOYING FIRST NODE, METHOD EMPLOYING SECOND NODE, UE, AND METHOD EMPLOYING UE**

(30) Priority: 29.09.2021 JP 2021160148
(71) Applicant: NEC Corporation, 108-8001 Tokyo (JP)
(72) Inventor: TAKAKURA Tsuyoshi, Tokyo 110-0012 (JP); TAMURA Toshiyuki, Tokyo 108-8001 (JP)
(74) Representative: MacDougall, Alan John Shaw
(86) International application number: PCT/JP2022/035504
(87) International publication number: WO 2023/054198

(57) **Abstract**

An apparatus, a method, and a program that contribute to clarifying a behavior of a network and a UE when the USS is not found in the UUAA-SM procedure are provided. An SMF receives from a UE a session establishment request message including an address of a USS and transmits to a UAS-NF an invocation message of an NEF authentication service including the address of the USS. The SMF receives from the UAS-NF a response message and transmit to the UE a reject response message to the session establishment request message when the response message includes a failure cause for the USS corresponding to the address of the USS. The reject response message includes information indicating a failure of a service related to USS corresponding to the address of the USS. This contributes to clarify the behavior of the SMF when the USS is not found in the UUAA-SM procedure.

## Description

### Technical Field

The present disclosure relates to a cellular network, and in particular to authentication and authorization of a drone system.

### Background Art

The 5G system (5GS) connects a radio terminal (user equipment (UE) or an Uncrewed Aerial Vehicle (UAV)) to a Data Network (DN). Hereinafter, a UE can be interpreted as UAV and vice versa. Connectivity services between the UE and the DN are supported by one or more Protocol Data Unit (PDU) sessions (see, for example, Non Patent Literature 1-3). A PDU session is an association, session, or connection between the UE and the DN. A PDU session is used to provide a PDU connectivity service (i.e., an exchange of PDUs between the UE and the DN). A PDU session is established between the UE and a User Plane Function (UPF) (i.e., PDU session anchor) to which the DN is connected. In terms of data transfer, a PDU session consists of a tunnel (N9 tunnel) in the 5G core network (5GC), a tunnel (N3 tunnel) between the 5GC and an Access Network (AN), and one or more radio bearers.

Non Patent Literature 2 and Non Patent Literature 3 specify the PDU session establishment procedure, the PDU session modification, and PDU session release procedures. More specifically, the PDU session establishment procedure is described, for example, in Chapter 4.3.2 of Non Patent Literature 2 and Chapter 6.4.1 of Non Patent Literature 3. The PDU session modification procedure is described, for example, in Chapter 4.3.3 of Non Patent Literature 2 and Chapter 6.4.2 of Non Patent Literature 3. The PDU session release procedure is described, for example, in Chapter 4.3.4 of Non Patent Literature 2 and Chapter 6.4.3 of Non Patent Literature 3.

The 5GS also supports network slicing (see, for example, Non Patent Literature 1 to 3, especially Section 5.15 of Non Patent Literature 1). Network slicing uses Network Function Virtualization (NFV) and software-defined networking (SDN) technologies, thereby creating multiple virtualized logical networks on top of physical networks. Each virtualized logical network is called a network slice. A network slice provides specific network capabilities and network characteristics. In order to form a single network slice, a network slice instance (NSI) is defined as a set of network function (NF) instances, resources (e.g., computer processing resources, storage, and networking resources), and an access network (AN) (at least one of a Next Generation Radio Access Network (NG-RAN) and a Non-3GPP Interworking Function (N3IWF)).

A network slice is identified by an identifier known as Single Network Slice Selection Assistance Information (S-NSSAI). The S-NSSAI consists of a Slice/Service type (SST) and a Slice Differentiator (SD). The SST refers to the expected network slice behavior in terms of features and services. The SD is optional information and complements the SST to differentiate amongst multiple network slices of the same Slice/Service type.

An S-NSSAI can have standard values or non-standard values. Currently, standard SST values 1, 2, 3, and 4 are associated respectively with enhanced Mobile Broad Band (eMBB), Ultra Reliable and Low Latency Communication (URLLC), Massive Internet of Things (MIoT), and Vehicle to Everything (V2X) slice types. A non-standard value of an S-NSSAI identifies a single network slice within a specific Public Land Mobile Network (PLMN). In other words, non-standard SST values are PLMN-specific values, and associated with the PLMN ID of a PLMN that has assigned them. Each S-NSSAI ensures network isolation by selecting a particular NSI. A NSI may be selected via different S-NSSAIs. An S-NSSAI may be associated with different NSIs. A network slice may be uniquely identified by an S-NSSAI.

There are two types of S-NSSAI, known as S-NSSAI and Mapped S-NSSAI. An S-NSSAI identifies a network slice served by a Public Land Mobile Network (PLMN) in which a UE is registered. A Mapped S-NSSAI may be an S-NSSAI of a Home PLMN (HPLMN) that is mapped to (associated with, or applicable to) an S-NSSAI that identifies a network slice of a roaming network when a UE is roaming, and also an S-NSSAI that is included in the subscription information of the UE. Thereafter, S-NSSAI and Mapped S-NSSAI may be collectively referred to as simply S-NSSAI in this specification.

Meanwhile, Network Slice Selection Assistance Information (NSSAI) means a set of S-NSSAIs. Accordingly, one or more S-NSSAIs can be included in one NSSAI. There are multiple types of NSSAI, known as Configured NSSAI, Requested NSSAI, Allowed NSSAI, Rejected NSSAI, and Pending NSSAI.

A Configured NSSAI includes one or more S-NSSAIs each applicable to one or more PLMNs. For example, The Configured NSSAI can include S-NSSAI and Mapped S-NSSAI. The Configured NSSAI is configured by a Serving PLMN and is applied to the Serving PLMN. Alternatively, the Configured NSSAI may be a Default Configured NSSAI. The Default Configured NSSAI is configured by the Home PLMN (HPLMN) and applies to any PLMNs for which no specific Configured NSSAI has been provided. For example, a radio terminal (User Equipment (UE)) is provisioned with the Default Configured NSSAI from a Unified Data Management (UDM) of the HPLMN via an Access and Mobility Management Function (AMF).

A Requested NSSAI is signaled by a UE to a network in, for example, a registration procedure, allowing the network to determine a serving AMF, at least one network slice and at least one NSIs, for this UE. The Requested NSSAI can include the S-NSSAI and the Mapped S-NSSAIs.

An allowed NSSAI is provided to a UE by a Serving PLMN and indicates one or more S-NSSAIs that the UE can use in the current Registration Area of the Serving PLMN. The Allowed NSSAI can include the S-NSSAI and the Mapped S-NSSAI. The Allowed NSSAI is determined by an AMF of the Serving PLMN, for example, during a registration procedure. Accordingly, the Allowed NSSAI is signaled to the UE by the network (i.e., AMF) and stored in (non-volatile) memories of both the AMF and the UE.

A Rejected NSSAI includes one or more S-NSSAIs rejected by the current (or serving) PLMN. When the UE is roaming, the Rejected NSSAI includes the S-NSSAI of the Home PLMN (HPLMN). The Rejected NSSAI may be referred to as rejected S-NSSAIs. A S-NSSAI is rejected throughout the current PLMN or rejected in the current registration area. If an AMF rejects any of one or more S-NSSAIs included in the Requested NSSAI, for example, in a registration procedure of a UE, it includes them in the Rejected NSSAI. The Rejected NSSAI is signaled to the UE by the network (i.e., AMF) and stored in (nonvolatile) memories of both the AMF and the UE.

The Extended Rejected NSSAI includes one or more S-NSSAIs rejected by the current (or serving) PLMN. The Extended Rejected NSSAI can include an S-NSSAI and a Mapped S-NSSAI.

A Pending NSSAI indicates one or more S-NSSAIs for which Network Slice-Specific Authentication and Authorization (NSSAA)) is pending. The Pending NSSAI can include S-NSSAI and Mapped S-NSSAI. A Serving PLMN shall perform NSSAA for S-NSSAIs of the HPLMN which are subject to NSSAA based on subscription information. In order to perform NSSAA, an AMF invokes an Extensible Authentication Protocol (EAP)-based authorization procedure. The EAP-based authentication procedure takes a relatively long time to obtain its outcome. Accordingly, whilst the AMF determines an Allowed NSSAI as described above during a registration procedure of a UE, it does not include S-NSSAIs subject to NSSAA in the Allowed NSSAI, but instead them in the Pending NSSAI. The Pending NSSAI is signaled to the UE by the network (i.e., AMF) and stored in (non-volatile) memories of both the AMF and the UE.

An AMF manages a UE context for a UE in Registration Management (RM)-REGISTERED state. The UE context may be referred to as, but is not limited to, a Mobility Management (MM) context. The UE context may include one or more of the Allowed NSSAI, Rejected NSSAI, Extended Rejected NSSAI, and Pending NSSAI described above. On the other hand, the UE manages a UE NSSAI configuration, which includes the Configured NSSAI, Allowed NSSAI, Rejected NSSAI, Extended Rejected NSSAI, and Pending NSSAI described above. The UE NSSAI configuration is stored in a non-volatile memory in the UE (Mobile Equipment (ME) except Universal Subscriber Identity Module (USIM)). The memory or memory area where the UE NSSAI configuration is stored is referred to as NSSAI storage.

Section 5.15.10 of Non Patent Literature 1 and Section 4.2.9 of Non Patent Literature 2 specify the Network Slice-Specific Authentication and Authorization (NSSAA). More specifically, section 5.15.10 of Non Patent Literature 1 and section 4.2.9.2 of Non Patent Literature 2 describe the NSSAA. Section 5.15.10 of Non Patent Literature 1 and Section 4.2.9.3 of Non Patent Literature 2 describe the re-authentication and re-authorization triggered by an Authentication, Authorization and Accounting (AAA) server (AAA-S). Section 5.15.10 of Non Patent Literature 1 and Section 4.2.9.4 of Non Patent Literature 2 describe the revocation of Slice-Specific Authorization triggered by an AAA server (AAA-S).

Section 5.2 of Non Patent Literature 4 specifies UAV Authentication and Authorization (UUAA). More specifically, Sections 5.2.2, 5.2.3 and 5.2.4 of Non Patent Literature 4 describe UAV Authentication and Authorization (UUAA). Section 5.2.5 of Non Patent Literature 4 describes Authorization for C2 to implement Command and Control (C2) Communication (hereinafter, UAV Authentication and Authorization (UUAA) can be interpreted as C2 Communication Authorization (Authorization for C2) and vice versa).

The Third Generation Partnership Project (3GPP) SA2 working group has begun working on standardizing 5G architecture enhancements for UAVs to achieve drone systems utilizing mobile communication (see, for example, Non Patent Literature 4). The 5G architecture enhancements specify the following enhancements: the function to authenticate and authorize UAVs by a UAS (Uncrewed Aerial System) Service Supplier (USS) in mobility management. This UAV authentication and authorization is referred to as UUAA-MM. The 5G architecture enhancements also specify the following enhancement function: UAV authentication and authorization by the USS in session management. This UAV authentication and authorization is referred to as UUAA-SM. UUAA-MM and UUAA-SM may be referred to as UUAA. The 5G architecture enhancements also specify the following enhancement: C2 communication authorization function to implement C2 communication.

The UE executes either a UUAA-MM procedure or a UUAA-SM procedure to undergo the authentication and authorization.

The UUAA-MM is executed when the registration procedure is executed based on the operator policy. The AMF executes the UUAA-MM procedure if Access and Mobility subscriber data of the UAV includes aerial UE subscription and a CAA (Civil Aviation Administration)-Level UAV Identity (CAA-Level UAV ID) is included in a registration request message. The CAA-Level-UAV ID is issued by the USS, which performs drone flight management, for example, and is used to identify the UAV.

When the UUAA-MM is not executed, the UUAA-SM is executed at the time when the PDU session establishment procedure (PDU session establishment and PDU session modification) is executed. The SMF executes the UUAA-SM procedure when DNN and/or S-NSSAI of the PDU session establishment are supported by the UAS service and the PDU session establishment procedure includes the CAA-Level UAV ID.

The UE must obtain C2 (Command and Control) communication authorization to enable operations based on the C2 communication. The C2 communication is propagating messages containing information about UAV operational commands and control from a UAV controller or UTM (UAS Traffic Management) to the UAV and reporting telemetry data from the UAV to the UAV controller or UTM. The UTM is a system that enables flying UAVs to safely and efficiently share airspace with other users.

The C2 communication authorization may be performed in the UUAA-SM procedure described above or after UAV authentication and authorization have been performed. When the C2 communication authorization is executed after the UAV authentication and authorization, the UE executes a PDU session modification procedure including the CAA-Level UAV ID and C2 authorization information. The SMF executes a C2 communication authorization procedure when the DNN and/or S-NSSAI of the PDU session to be modified are supported by the UAS service and the PDU session modification procedure includes the CAA-Level UAV ID.

In the UUAA-MM, UUAA-SM, and C2 communication authorization described above, after each procedure is initiated, exchanges of authentication and/or authorization information between the USS and the UE are performed multiple times, and the UE is notified of the results of authentication and authorization. In the UUAA-MM procedure, a DL NAS TRANSPORT message transmitted by the AMF to the UE includes the result of authentication and authorization. In the UUAA-SM procedure, a PDU session accept message transmitted by the SMF to the UE includes the result of authentication and authorization. The existing Network Triggered service request procedure is specified in Figure 4.2.3.3-1 of Non Patent Literature 2.

### Citation List

### Non Patent Literature

Non Patent Literature 1: 3GPP TS 23.501 V17.2.0 (2021-09) "3rd Generation Partnership Project; Technical Specification Group Services and System Aspects; System architecture for the 5G System (5GS); Stage 2 (Release 17)", September 2021
Non Patent Literature 2: 3GPP TS 23.502 V17.2.0 (2021-09) "3rd Generation Partnership Project; Technical Specification Group Services and System Aspects; Procedures for the 5G System (5GS); Stage 2 (Release 17)", September 2021
Non Patent Literature 3: 3GPP TS 24.501 V17.4.1 (2021-09) "3rd Generation Partnership Project; Technical Specification Group Core Network and Terminals; Non-Access-Stratum (NAS) protocol for 5G System (5GS); Stage 3 (Release 17)", September 2021
Non Patent Literature 4: 3GPP TS 23.256 V17.0.0 (2021-09) "3rd Generation Partnership Project; Technical Specification Group Services and System Aspects; Support of Uncrewed Aerial Systems (UAS) connectivity, identification and tracking; Stage 2 (Release 17)", September 2021
Non Patent Literature 5: 3GPP TS 23.503 V17.2.0 (2021-09) "3rd Generation Partnership Project; Technical Specification Group Services and System Aspects; Policy and charging control framework for the 5G System (5GS);Stage 2(Release 17) , September 2021

### Summary of Invention

### Technical Problem

The inventors have studied and discovered various issues related to authentication and authorization procedures for a UAS Service in session management. Firstly, it is unclear how the SMF and the UE behave when an USS is not found in the UUAA-SM procedure.

Second, during the UUAA-SM procedure in the UAS service associated with only the DNN, the behavior of the UE when transmitting a new PDU SESSION ESTABLISHMENT REQUEST message with the combination of the same DNN and S-NSSAI is unknown.

Third, the behavior of the UE and AMF when the UE transmits the PDU SESSION ESTABLISHMENT REQUEST message including the DNN and/or S-NSSAI for the UAS service if the AMF manages the UE context including information indicating that the UUAA-MM has failed is unknown.

Fourth, the behavior of the UE, AMF, and SMF when the UE transmits the PDU SESSION ESTABLISHMENT REQUEST message including the DNN and/or S-NSSAI for the UAS service if the AMF manages the UE context including information indicating that the UUAA-MM has failed is unknown.

One of the objects that the example embodiments disclosed herein seek to achieve is to provide an apparatus, a method, and a program that contribute to clarifying a behavior of a network and a UE when the USS is not found in the UUAA-SM procedure. It should be noted that this object is only one of a plurality of objects that the example embodiments disclosed herein seek to achieve. Other objects or issues and novel features are apparent from the description or accompanying drawings herein.

### Solution to Problem

In a first aspect, a first core network node for performing session management includes: a memory; and at least one processor coupled to the memory. The at least one processor is configured to receive from a User Equipment (UE) a session establishment request message including an address of a Uncrewed Aerial System (UAS) Service Supplier (USS). The at least one processor is configured to transmit to a second core network node providing a UAS service an invocation message of a Network Exposure Function (NEF) authentication service including the address of the USS. The at least one processor is configured to receive a response message to the invocation message from the second core network node. The at least one processor is configured to transmit to the UE a reject response message to the session establishment request message if the response message includes a failure cause for the USS corresponding to the address of the USS. The reject response message includes information indicating a failure of a service related to the USS corresponding to the address of the USS.

In a second example aspect, a User Equipment (UE) includes: a memory; and at least one processor coupled to the memory. The at least one processor is configured to transmit to a first core network node for performing session management a session establishment request message including an address of an Uncrewed Aerial System (UAS) Service Supplier (USS). The at least one processor is configured to receive from the first core network node a reject response message to the session establishment request message, when a response message to an invocation message of a Network Exposure Function (NEF) authentication service including the address of the USS received by the first core network node from a second core network node providing a UAS service includes a failure cause for the USS corresponding to the address of the USS. The reject response message includes information indicating a failure of a service related to the USS corresponding to the address of the USS.

In a third aspect, a second core network node providing an Uncrewed Aerial System (UAS) service includes: a memory; and at least one processor coupled to the memory. The at least one processor is configured to receive from a first core network node for performing session management an invocation message of a Network Exposure Function (NEF) authentication service including an address of a UAS Service Supplier (USS). The at least one processor is configured to transmit to the first core network node a response message to the invocation message. The response message includes a failure cause for the USS corresponding to the address of the USS, thereby causing the first core network node to transmit to an User Equipment (UE) a reject response message to a session establishment request. The reject response message includes information indicating a failure of a service related to the USS corresponding to the address of the USS.

In a fourth aspect, a third core network node for performing mobility management includes: a memory; and at least one processor coupled to the memory. The at least one processor is configured to receive from a User Equipment (UE) a session establishment request message including an address of a Uncrewed Aerial System (UAS) Service Supplier (USS). The at least one processor is configured to transmit to the UE a reject response message to the session establishment request message when a first core network node for performing session management corresponding to the USS address cannot be identified based on the USS address. The reject response message includes a failure cause indicating that the first core network node corresponding to the USS address cannot be identified.

In a fifth aspect, a method in a first core network node for performing session management includes: receiving from a User Equipment (UE) a session establishment request message including an address of a Uncrewed Aerial System (UAS) Service Supplier (USS); transmitting to a second core network node providing a UAS service an invocation message of a Network Exposure Function (NEF) authentication service including the address of the USS; receiving a response message to the invocation message from the second core network node; and transmitting to the UE a reject response message to the session establishment request message if the response message includes a failure cause for the USS corresponding to the address of the USS. The reject response message including information indicating a failure of a service related to the USS corresponding to the address of the USS.

In a sixth aspect, a method in a User Equipment (UE) includes: transmitting to a first core network node for performing session management a session establishment request message including an address of an Uncrewed Aerial System (UAS) Service Supplier (USS); and receiving from the first core network node a reject response message to the session establishment request message, when a response message to an invocation message of a Network Exposure Function (NEF) authentication service including the address of the USS received by the first core network node from a second core network node providing a UAS service includes a failure cause for the USS corresponding to the address of the USS. The reject response message includes information indicating a failure of a service related to the USS corresponding to the address of the USS.

In a seventh aspect, a method in a second core network node providing an Uncrewed Aerial System (UAS) service includes: receiving from a first core network node for performing session management an invocation message of a Network Exposure Function (NEF) authentication service including an address of a UAS Service Supplier (USS); and transmitting to the first core network node a response message to the invocation message. The response message includes a failure cause for the USS corresponding to the address of the USS, thereby causing the first core network node to transmit to an User Equipment (UE) a reject response message to a session establishment request. The reject response message including information indicating a failure of a service related to the USS corresponding to the address of the USS.

In an eighth aspect, a method in a third core network node for performing mobility management includes: receiving from a User Equipment (UE) a session establishment request message including an address of a Uncrewed Aerial System (UAS) Service Supplier (USS); and transmitting to the UE a reject response message to the session establishment request message when a first core network node for performing session management corresponding to the USS address cannot be identified based on the USS address. The reject response message includes a failure cause indicating that the first core network node corresponding to the USS address cannot be identified.

In a ninth aspect, a program includes instructions (software codes) that, when loaded into a computer, causes the computer to perform the method according to the fifth to eighth aspects described above.

### Advantageous Effects of Invention

According to the above aspects, it is possible to provide an apparatus, a method, and a program that contribute to clarifying a behavior of a core network node and a UE when the USS is not found in the UUAA-SM procedure.

### Brief Description of Drawings

Fig. 1 shows a configuration example of a cellular network according to an example embodiment;
Fig. 2 is a flowchart showing an example of an operation of an SMF according to the example embodiment;
Fig. 3 is a sequence diagram showing an example of an operation of a UE, an AMF, the SMF, and a UAS-NF according to the example embodiment;
Fig. 4 is a flowchart showing an example of an operation of the UE according to the example embodiment;
Fig. 5 is a flowchart showing an example of an operation of the AMF according to the example embodiment;
Fig. 6 is a sequence diagram showing an example of the operation of the UE, the AMF, and the SMF according to the example embodiment;
Fig. 7 is a flowchart showing an example of an operation of the AMF according to the example embodiment;
Fig. 8 is a sequence diagram showing an example of an operation of the UE, the AMF, and the SMF according to the example embodiment;
Fig. 9 is a flowchart showing an example of an operation of the SMF according to the example embodiment;
Fig. 10 is a block diagram showing a configuration example of the UE according to the example embodiment; and
Fig. 11 is a block diagram showing a configuration example of the AMF according to the example embodiment.

### Example Embodiment

Hereinafter, specific example embodiments will be described in detail with reference to the drawings. In each drawing, the same or corresponding elements are given the same reference signs, and repeated descriptions will be omitted as necessary for clarity of description.

The example embodiments described below may be implemented independently or in combination as appropriate. These example embodiments have novel features that differ from each other. Thus, the plurality of example embodiments contribute to solving different objects or problems and to achieving different effects.

The following descriptions on the example embodiments mainly focus on the 3rd Generation Partnership Project (3GPP) fifth generation mobile communication system (5G system (5GS)). However, these example embodiments may be applied to other cellular communication systems that support network slicing similar to that of the 5GS.

In particular, the plurality of example embodiments shown below may be applied to the 3GPP 4th generation mobile communication system (Evolved Packet System (EPS)), as an example, according to the vocabulary shown in Table 1.

**[Table 1]**

| Terminology used in the present disclosure | Terminology for application to EPS |
|---|---|
| AMF | MME |
| SMF | SGW |
| UDM | HSS |
| PDU session | PDN connection |
| PDU SESSION ESTABLISHMENT REQUEST message | ATTACH Request message or Tracking Area Update message |
| PDU SESSION ESTABLISHMENT REJECT message | ATTACH Request message or Tracking Area Update Reject message |
| Nsmf_PDUSession_CreateSMContext Request message | Create Session Request message |
| Nsmf_PDUSession_CreateSMContext Response message | Create Session Response message |

### <First example embodiment>

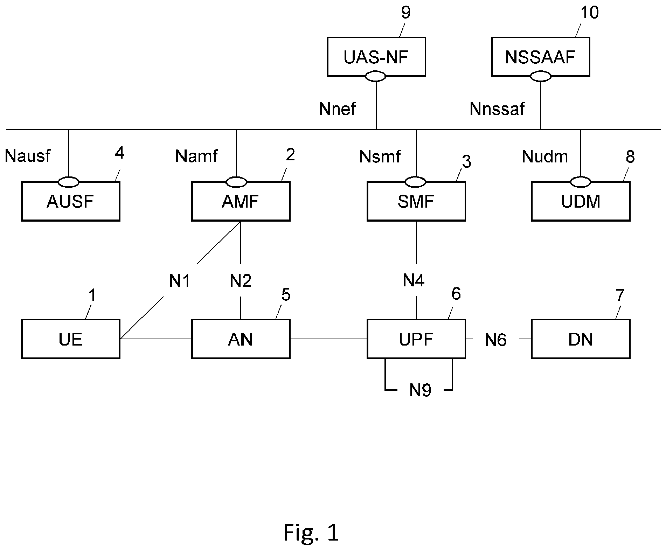

Fig. 1 shows a configuration example of a cellular network (i.e., 5GS) according to this example embodiment. Each of the elements shown in Fig. 1 is a network function and provides an interface as defined by the 3rd Generation Partnership Project (3GPP). Each of the elements (network functions) shown in Fig. 1 can be implemented, for example, as a network element on dedicated hardware, as a software instance running on dedicated hardware, or as a virtual function instantiated on an application platform.

The cellular network shown in Fig. 1 may be provided by a Mobile Network Operator (MNO), or it may be a Non-Public Network (NPN) provided by a non-MNO. If the cellular network shown in Fig. 1 is an NPN, it may be an independent network, represented as a Stand-alone Non-Public Network (SNPN), or it may be an NPN linked to an MNO network, represented as a public network integrated NPN.

A radio terminal (i.e., UE or UAV) 1 uses 5G connectivity services and communicates with a data network (DN) 7. More specifically, the UE 1 is connected to an access network (i.e., 5G Access Network (5GAN)) 5 and communicates with the data network (DN) 7 via a User Plane Function (UPF) 6 in a core network (i.e., 5G core network (5GC)). The AN 5 may include a Next Generation Radio Access Network (NG-RAN) or a non-3GPP AN, or both. The non-3GPP AN may be a network that handles wireless LAN (WiFi) communications or a network that handles wired communications, referred to as a Wireline 5G Access Network (W-5GAN). The UPF 6 may include multiple UPFs that are interconnected. Hereinafter, the UE can be interpreted as UAV and vice versa.

In the 5G architecture, the connectivity service between the UE 1 and the DN 7 is supported by one or more Protocol Data Unit (PDU) sessions. A PDU session is an association, session, or connection between the UE 1 and the DN 7. A PDU session is used to provide a PDU connectivity service (i.e., an exchange of PDUs between the UE 1 and the DN 7). The UE 1 establishes one or more PDU sessions between the UE 1 and the UPF 6 (i.e., the PDU session anchor) to which the DN 7 is connected. In terms of data transfer, a PDU session consists of a tunnel (N9 tunnel) in the 5GC, a tunnel (N3 tunnel) between the 5GC and the AN 5 and one or more radio bearers. The UE 1 may establish multiple PDU sessions with multiple UPFs (PDU session anchors) 6 in order to concurrently access multiple DNs 7.

The AMF 2 is one of the network functions in the 5GC Control Plane. The AMF 2 provides the termination of a RAN Control Plane (CP) interface (i.e., N2 interface). The AMF 2 terminates a single signalling connection (i.e., N1 NAS signalling connection) with the UE 1 and provides registration management, connection management, and mobility management. The AMF 2 provides NF services to NF consumers (e.g., other AMFs, Session Management Function (SMF) 3, and Authentication Server Function (AUSF) 4) on a service-based interface (i.e., Namf interface). The NF services provided by the AMF 2 include a communication service (Namf_Communication). The communication service allows NF consumers (e.g., SMF 3) to communicate with the UE 1 or AN 5 via the AMF 2.

The SMF 3 is one of the network functions in the 5GC Control Plane. The SMF 3 manages PDU sessions. The SMF 3 sends and receives SM signalling messages (NAS-SM messages, N1 SM messages) to and from the Non-Access-Stratum (NAS) Session Management (SM) layer of the UE 1 via communication services provided by the AMF 2. The SMF 3 provides NF services on a service-based interface (i.e., Nsmf interface) to NF consumers (e.g., AMF 2, other SMFs). The NF services provided by the SMF 3 include a PDU session management service (Nsmf_PDUSession), which allows the NF consumer (e.g., AMF 2) to handle PDU sessions. The SMF 3 may be an Intermediate SMF (I-SMF). The I-SMF is inserted between the AMF 2 and an original SMF 3 as needed when the UPF 6 belongs to a different SMF service area and cannot be controlled by the original SMF.

The AUSF 4 is one of the network functions in the 5GC Control Plane. The AUSF 4 provides NF services on a service based interface (i.e., Nausf interface) to NF consumers (e.g., AMF 2, UDM 8). The NF services provided by the AUSF 4 include a UE authentication service (e.g., Nausf_UEAuthentication and Nausf_NSSAA_Authenticate). The Nausf_UEAuthentication service provides UE authentication and related key information (keying material) to the NF consumer (i.e., AMF). More specifically, the AUSF 4 cooperates with the UDM 8 and Authentication credential Repository and Processing Function (ARPF) to perform authentication using one of the two authentication methods (i.e., 5G-Authentication and Key Agreement (AKA) and EAP-based authentication) supported by the 5GS. After performing the authentication, the AUSF 4 replies to the AMF 2 with the authentication result and, if successful, a master key. The master key is used by the AMF 2 to derive NAS security keys and other security key(s). For UE authentication, the AUSF 4 works closely with the UDM 8. The Nausf_NSSAA_Authenticate service provides the NF consumer (e.g., AMF 2) with a Network Slice-Specific Authentication and Authorization service between the UE 1 and an AAA server via the AUSF 4.

The UDM 8 is one of the network functions in the 5GC Control Plane. The UDM 8 provides access to a database (i.e., User Data Repository (UDR)) storing subscriber data (subscription information). The UDM 8 provides NF services on a service-based interface (i.e., Nudm interface) to NF consumers (e.g., AMF 2, AUSF 4, SMF 3). The NF services provided by the UDM 8 include a subscriber data management service, which allows the NF consumer (e.g., AMF) to retrieve subscriber data and provides updated subscriber data to the NF consumer.

A UAS NF 9 is one of the network functions in the 5GC Control Plane. The UAS NF 9 is supported by the NEF (Network Exposure Function) or SCEF (Service Capability Exposure Function) +NEF and is used for external exposure of services to the USS. The UAS NF 9 uses the existing NEF/SCEF external exposure in controlling UAV authentication/authorization, UAV flight authorization, UAV-UAVC pairing authorization, and their revocation, location reporting, and QoS/traffic filtering for the C2 communications. The UAS NF 9 may be implemented and deployed in the form of a dedicated NEF that implements only the UAS NF function. Note that SCEF+NEF is a node that integrates SCEF, a 4G logical node, and NEF, a 5G logical node, in order to smoothly perform 4G and 5G interworking. The SCEF+NEF node is associated with the UE for Service Capability Exposure if the UE supports mobility between EPS and 5GS.

The UAS NF 9 stores and maintains information about whether re-authentication is in the AMF or SMF/SMF+PGW-C and the address of the serving AMF or SMF/SMF+PGW-C to support a re-authentication request by the USS. In addition, the UAS NF 9 stores and maintains the result of the UUAA-MM procedure and the result of the UUAA-SM procedure. SMF+PGW-C is a node that integrates PGW-C, a 4G logical node, and SMF, a 5G logical node, in order to smoothly perform 4G and 5G interworking. The SMF/PGW-C is a core network node used for PDN connectivity when 5GS and EPS interworking is supported.

An NSSAAF (Network Slice-specific and SNPN Authentication and Authorization Function) 10 connects to an AAA server (AAA-S), which is an authentication server, and supports network slice-specific authentication and authorization functions. If the AAA-S belongs to a third party, the NSSAAF connects to the AAA-S via the AAA proxy (AAA-P).

A configuration example of Fig. 1 shows only representative NFs for explanatory purposes. The cellular network according to this example embodiment may include other NFs not shown in Fig. 1, such as Network Slice Selection Function (NSSF), Policy Control Function (PCF), Application Function (AF), NEF (Network Exposure Function), and Network Repository Function (NRF).

The inventors have studied and discovered various issues related to the UUAA-SM procedures. For example, the operation of the SMF and the UE when the USS is not found is unclear.

This example embodiment provides an example of an operation of the SMF 3 in the UUAA-SM procedure.

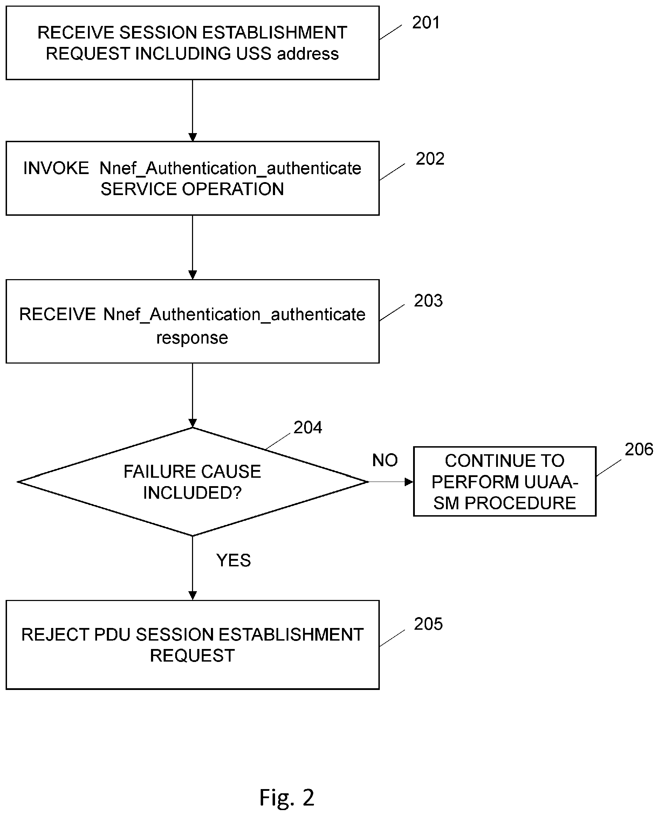

Fig. 2 is a flowchart showing an example of the operation of SMF 3 according to this example embodiment. In step 201, the SMF 3 receives a PDU SESSION ESTABLISHMENT REQUEST message including a USS address (e.g. FQDN (Fully Qualified Domain Name)) from the UE 1. Note that the USS address is set in the service-level-AA container IE.

In step 202, the SMF 2 invokes a Nnef_Authentication_authenticate service operation of the UAS-NF 9. The service operation includes the USS address (e.g. FQDN). For example, the SMF 3 transmits to the UAS-NF 9 an Nnef_Authentication_authenticate request message including the USS address (e.g. FQDN) received from the UE 1.

In step 203, the AMF 2 receives from the UAS-NF 9 an Nnef_Authentication_authenticate response in response to the invocation of the Nnef_Authentication_authenticate service operation.

If the Nnef_Authentication_authenticate response in step 203 includes a failure cause (YES in step 204), the procedure proceeds to step 205. At this time, PEER_NOT_RESPONDING may be set, but not limited to, in the Nnef_Authentication_authenticate response as the failure cause (Application Error). Specifically, in response to the Nnef_Authentication_authenticate service operation call in step 202, the UAS-NF 9 attempts to invoke the Naf_Authentication_authenticate service operation, but there is no response from the USS (DN7). Therefore, the UAS-NF 9 may detect an occurrence of HTTP status code 504 Gateway Timeout, and set PEER_NOT_RESPONDING as the failure cause (Application Error). In step 205, the SMF 2 transmits a PDU SESSION ESTABLISHMENT REJECT message including the failure cause to the UE 1. The failure cause may indicate that the USS cannot be identified based on the designated USS address or that there is no response from the USS identified based on the designated USS address. For example, the value indicating the failure cause may be, but is not limited to, "USS not available". Note that the failure cause is set in Service-level-AA response IE.

In contrast, if the Nnef_Authentication_authenticate response in step 203 does not include a failure cause (NO in step 204), the procedure proceeds to step 206. Here, if the Nnef_Authentication_authenticate response does not include a failure cause, the Nnef_Authentication_authenticate response may include information indicating that the USS has been identified and connected. For example, but not limited to, "USS available" may be set in the Service-level-AA response IE. In step 206, the SMF 3 continues to perform the UUAA-SM procedure. Specifically, the SMF 3 transmits to the UE 1 an authentication message from the USS received via the UAS-NF 9 in step 203. The authentication message may be included in a SERVICE-LEVEL AUTHENTICATION COMMAND message.

According to the operation shown in Fig. 2, the SMF 3 can notify the UE 1 of a USS-specific failure cause.

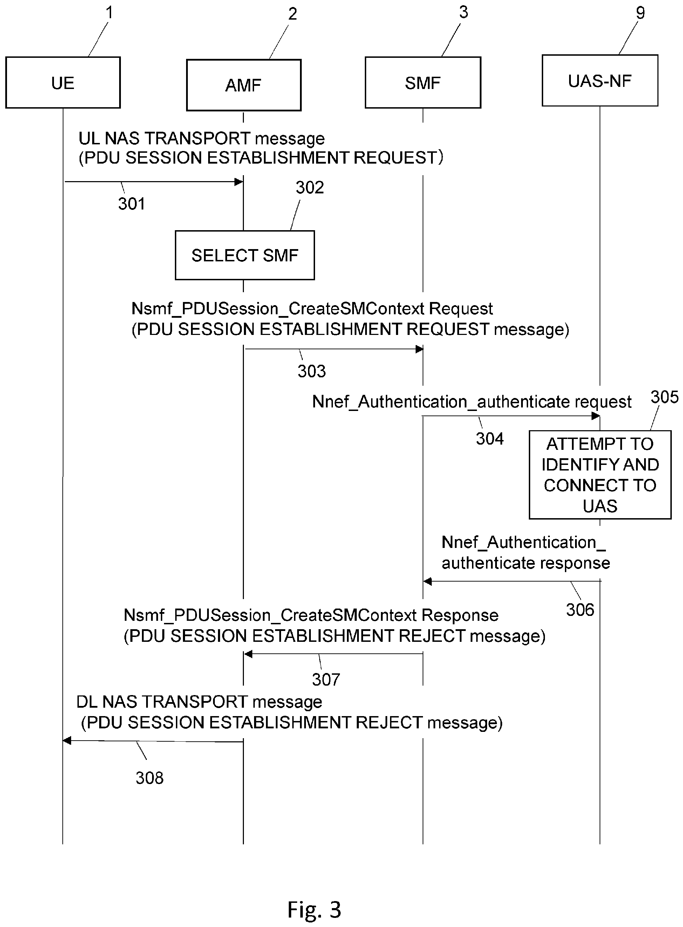

Fig. 3 shows an example of the UUAA-SM procedure. In step 301, the UE 1 transmits to the AMF 2 a UL NAS TRANSPORT message with the PDU SESSION ESTABLISHMENT REQUEST message set for a PDU session establishment request to the DN 7 providing the UAS service. The UL NAS TRANSPORT message may be set with at least one of S-NSSAI corresponding to the UAS service, the DNN corresponding to the UAS service, and the CAA-Level UAV ID of the UE 1 as a Service Level Device Identity. The PDU SESSION ESTABLISHMENT REQUEST message may be set with at least one of the USS address corresponding to the UAS service and the CAA-Level UAV ID of the UE 1 as the Service Level Device Identity.

In step 302, the AMF 2 selects the SMF 3 by using at least one of the S-NSSAI corresponding to the UAS service, the DNN corresponding to the UAS service, and the Service Level Device Identity set in the UL NAS TRANSPORT message. If, in step 302, the SMF 3 corresponding to the DN 7 providing the UAS service is not found, the AMF 2 executes step 308. In this case, the AMF 2 sets a failure cause indicating that the DN 7 providing the UAS service is not found and notifies the UE 1. The UE 1 receiving this failure cause may notify an upper layer of the failure cause.

In step 303, the AMF 2 transmits to the SMF 3 an Nsmf_PDUSession_CreateSMContext Request set with the PDU SESSION ESTABLISHMENT REQUEST message received in step 302.

In step 304, the SMF 3 invokes the Nnef_Authentication_authenticate service operation of the UAS-NF 9. The service operation includes the USS address (e.g. FQDN). For example, the SMF 3 transmits to the UAS-NF 9 the Nnef_Authentication_authenticate request message including the USS address (e.g. FQDN) received from the UE 1.

In step 305, the UAS-NF 9 attempts to identify and connect to the USS based on the USS address designated in the UE 1. Specifically, the UAS-NF 9 identifies the USS using the designated USS address. Identifying the USS may be a USS address resolution. If the identification of the USS is successful, the UAS-NF 9 invokes the Naf_Authentication_authenticate service operation.

In step 306, the UAS-NF 9 notifies the SMF 3 of the identification and connection attempt result of the USS shown in step 305 by including them in the Nnef_Authentication_authenticate response. For example, if the USS cannot be identified or there is no response from the identified USS, the UAS-NF 9 may notify the SMF 3 of the failure cause. For example, if a successful response is received from the identified USS, the UAS-NF 9 may notify the SMF 3 of information indicating a success.

In step 307, when the USS address is set in the Service-level-AA container IE included in the PDU SESSION ESTABLISHMENT REQUEST message from the UE 1 and the Nnef_Authentication_authenticate response including the failure cause is received, the SMF 3 transmits the PDU SESSION ESTABLISHMENT REJECT message including the failure cause to the AMF 2.

In step 308, the AMF 2 sets the received PDU SESSION ESTABLISHMENT REJECT message in the DL NAS TRANSPORT message and transmits it to the UE 1. If the UE 1 receives the PDU SESSION ESTABLISHMENT REJECT message including the failure cause and transmit a REGISTRATION REQUEST message with the USS address set in the Service-level-AA container IE, it may notify the upper layer of the failure cause.

Thus, it is possible for an SMF to notify an UE of a failure cause when a USS is not found or there is no response from the USS in the UUAA-SM procedure.

### <Second example embodiment>

This example embodiment provides an example of an operation of the UE 1 in the UUAA-SM procedure. A configuration example of a cellular network according to this example embodiment may be similar to the example shown in Fig. 1.

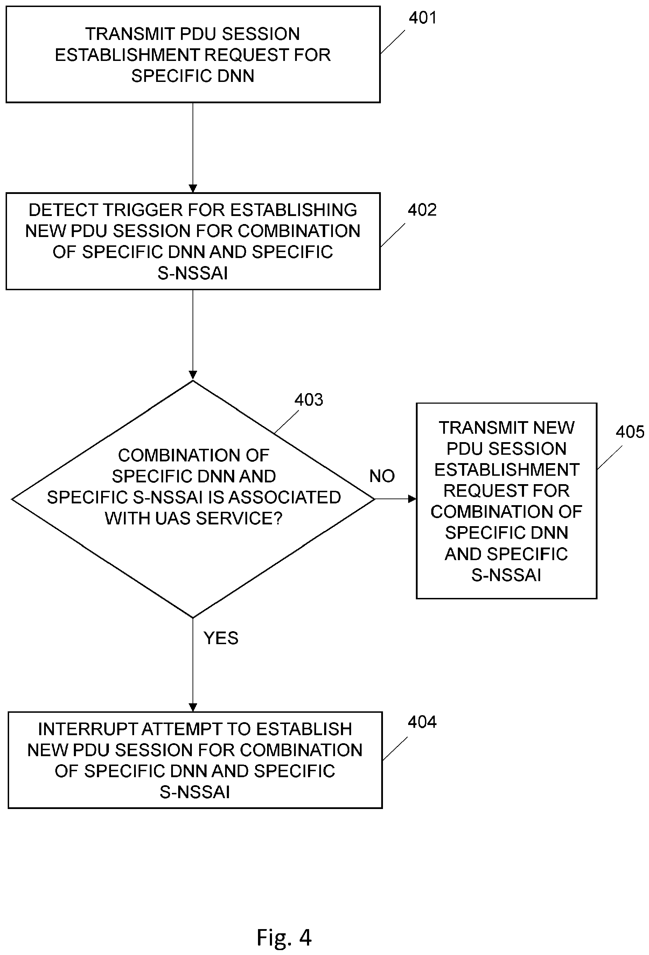

Fig. 4 is a flowchart showing an example of an operation of the UE 1 according to this example embodiment. In step 401, the UE 1 transmits to the AMF 2 the PDU SESSION ESTABLISHMENT REQUEST for a specific DNN including the CAA-level UAV ID (service-level device ID). The UE 1 may determine a specific DNN based on the UE Route Selection Policy (URSP). Specifically, if Route selection components include the specific DNN for a Traffic descriptor indicating the UAS Service, the UE 1 may select the specific DNN in a PDU session establishment request for the UAS Service. The existing URSP structure is defined in Section 6.6.2 of Non Patent Literature 5. The specific DNN may be a DNN capable of providing a UAS service. Upon receiving the PDU SESSION ESTABLISHMENT REQUEST for the specific DNN, the AMF 2 initiates the UUAA-SM procedure.

In step 402, the UE 1 detects a trigger for establishing a new PDU session for a combination of the specific DNN and a specific S-NSSAI. Here, the specific DNN may be the same as the specific DNN included in the PDU session establishment request in step 401. The specific S-NSSAI may be a specific S-NSSAI not included in the PDU session establishment request in step 401. In step 401, if the specific DNN selected by the UE 1 is a target of the UAS Service, the UE 1 may be configured not to transmit a new PDU session establishment request for the specific DNN until it receives the response to the PDU session establishment request in step 401. Alternatively, if the UE 1 has received from the network a SERVICE-LEVEL AUTHENTICATION COMMAND message including an authentication message after transmitting the PDU SESSION ESTABLISHMENT REQUEST message as the PDU session establishment request, the UE 1 may be configured not to transmit a new PDU session establishment request for the specific DNN until it receives the response to the PDU session establishment request. If the UE 1 has selected a combination of a specific DNN and a specific S-NSSAI for the UAS service in step 401, the UE 1 may be configured not to transmit a new PDU session establishment request for the combination of the specific DNN and S-NSSAI. Alternatively, if the UE 1 has received from the network the SERVICE-LEVEL AUTHENTICATION COMMAND message including an authentication message after transmitting the PDU SESSION ESTABLISHMENT REQUEST message as the PDU session establishment request, the UE 1 may be configured not to transmit a new PDU session establishment request to the combination of the specific DNN and S-NSSAI until it receives response to the PDU session establishment request.

If the combination of the specific DNN and S-NSSAI is associated with the UAS Service (YES in step 403), the procedure proceeds to step 404. The UE 1 may perform the determination in step 403 based on the URSP. In step 404, the UE 1 interrupts the attempt to establish a new PDU session for the combination of the specific DNN and the specific S-NSSAI. The UE 1 may also delay the attempt to establish a new PDU session for the combination of the specific DNN and the specific S-NSSAI for a predetermined period of time.

In contrast, if the combination of the specific DNN and the specific S-NSSAI is not associated with the UAS Service (NO in step 403), the procedure proceeds to step 405. In step 405, the UE 1 transmits a new PDU session establishment request for the combination of the specific DNN and the specific S-NSSAI.

According to the operation shown in Fig. 4, the UE 1 can control the PDU session establishment request during the execution of the UUAA-SM procedure. Thus, the UE 1 can prevent a collision between the UUAA-SM procedure and the PDU session establishment procedure. For example, if the UE 1 has not received a response to the PDU session establishment request for the DNN associated with the UAS service, the UE 1 is not allowed to transmit the PDU session establishment request (without S-NSSAI) for the same DNN. On the other hand, even if the UE 1 has not received a response to the PDU session establishment request for the DNN associated with the UAS service, the UE 1 is allowed to transmit the PDU session establishment request for the combination of the same DNN as the DNN included in the PDU session establishment request and S-NSSAI. The response may be the PDU SESSION ESTABLISHMENT REJECT message or a PDU SESSION ESTABLISHMENT ACCEPT message.

Although the control of the PDU session establishment request during the execution of the UUAA-SM procedure has been described, the UE 1 may perform the similar operation in the PDU session establishment request during execution of C2 communication authorization.

Thus, during the UUAA-SM procedure in the UAS service associated with only the DNN, the UE interrupts the transmission of a new PDU SESSION ESTABLISHMENT REQUEST message carrying the combination of the same DNN and S-NSSAI, thereby reducing the load on the network.

In Fig. 4, the operation of determining whether or not the UE 1 can make a new PDU session establishment request based on a specific DNN or a specific DNN and a specific S-NSSAI has been described, but in another example, the UE 1 may make a determination based on the CAA-Level UAV ID. Specifically, in step 401, if the specific DNN selected by the UE 1 is a target of the UAS Service, the UE 1 recognizes that the UUAA-SM procedure is in progress (pending), and does not transmit a new PDU session establishment request including the same CAA-Level UAV ID as the CAA-Level UAV ID included in the PDU session establishment request until it receives the response to the PDU session establishment request in step 401, until the PLMN is changed, or until the UE is powered off. Here, the response to the PDU session establishment request may be the PDU SESSION ESTABLISHMENT ACCEPT or the PDU SESSION ESTABLISHMENT REJECT. In addition, the response to the PDU session establishment request may include the same CAA-Level UAV ID as the one included by the UE 1 in the PDU session establishment request. The same operation as described above may be performed when the UE 1 selects a specific DNN and a specific S-NSSAI in step 401. The CAA-Level UAV ID may be a Service Level Device Identity, a UAV identifier, or a recognizer that identifies another UAV.

### <Third example embodiment>

This example embodiment provides an operation of the AMF 2 in the UUAA-SM procedure. The configuration example of a cellular network according to this example embodiment may be similar to the example shown in Fig. 1.

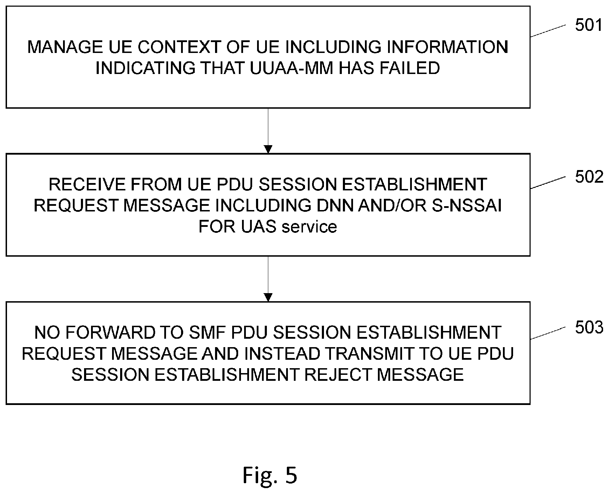

Fig. 5 is a flowchart showing an example of an operation of the AMF 2 according to this example embodiment. In step 501, the AMF 2 manages the UE context of the UE 1 in a RM-REGISTERED state. The UE context includes information indicating that the UE 1 has failed the UUAA-MM by the time it generates the UE context. If the UE 1 that supports the UUAA-MM in the subscription information does not include the CAA-Level UAV ID in the registration request message during the registration procedure, the AMF 2 grants registration but includes in the UE context information indicating that the UE 1 has failed the UUAA-MM.

In step 502, the AMF 2 receives from the UE 1 the PDU SESSION ESTABLISHMENT REQUEST message for the UAS service. The AMF 2 determines whether the received PDU SESSION ESTABLISHMENT REQUEST is a PDU SESSION ESTABLISHMENT REQUEST message for the UAS Service based on a DNN included in the UL NAS TRANSPORT message including the PDU SESSION ESTABLISHMENT REQUEST message or a combination of the DNN and S-NSSAI. Note that the determination may be based, for example, on the fact that the DNN corresponds to the UAS Service. The determination may be based, for example, on the fact that the S-NSSAI corresponds to the UAS Service. The determination may be based, for example, on the fact that the DNN corresponds to the UAS Service and the S-NSSAI corresponds to the UAS Service. If the UL NAS TRANSPORT message including the PDU SESSION ESTABLISHMENT REQUEST message has the CAA-Level UAV ID of the UE 1 set as the Service Level Device Identity, the AMF 2 may determine the PDU SESSION ESTABLISHMENT REQUEST as the PDU SESSION ESTABLISHMENT REQUEST message for the UAS Service.

In step 503, based on the fact that the UE context managed in step 501 includes information indicating that the UUAA-MM has failed, the AMF 2 does not forward the PDU SESSION ESTABLISHMENT REQUEST message received in step 502 to the SMF 3 and instead transmit the DL NAS TRANSPORT message including the PDU SESSION ESTABLISHMENT REJECT message to the UE 1.

According to the operation shown in Fig. 5, the AMF 2 can prevent the UAS service from being used by the UE 1 which has failed the UUAA-MM procedure. In other words, the AMF 2 can prevent the UAS service from being used by the UAV authentication and unauthorized UEs. Specifically, as an example, the AMF 2 receives from the UE 1 a UL NAS TRANSPORT message including the PDU SESSION ESTABLISHMENT REQUEST message with a DNN or a combination of DNN and S-NSSAI for the UAS Service. If the UE context of the UE 1 held by the AMF 2 includes information indicating that the UUAA-MM has failed, the AMF 2 transmits to the UE 1 the DL NAS TRANSPORT message including a failure cause value indicating that the UUAA-MM has failed or that the UUAA-MM has failed because it did not include the CAA-Level UAV ID. Specifically, the failure cause value may be, but is not limited to, 5GMM cause "CAA-Level UAV ID is missing".

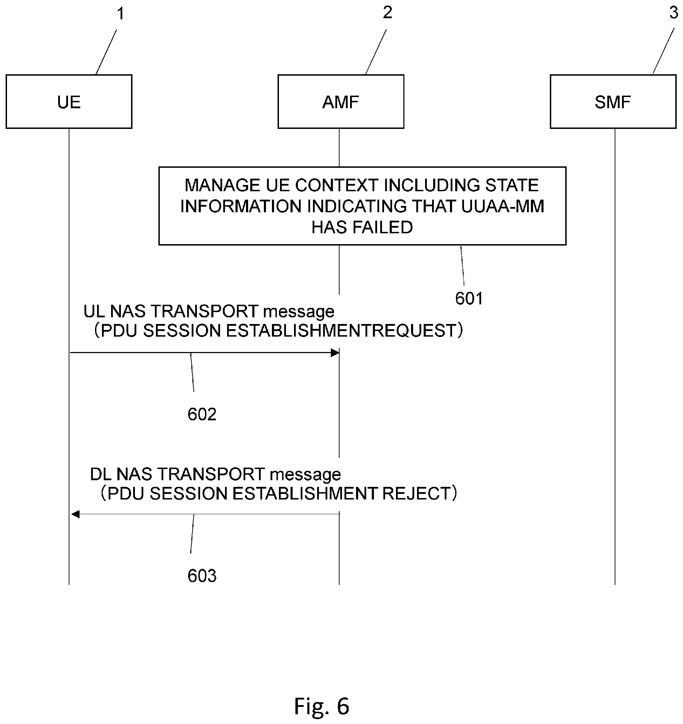

Fig. 6 shows an example of the UUAA-SM procedure in this example embodiment. In step 601, the AMF 2 manages the UE context of the UE 1 that is in the RM-REGISTERED state. The UE context includes information indicating that the UE 1 has failed the UUAA-MM by the time it generates the UE context.

In step 602, the AMF 2 receives the UL NAS TRANSPORT message including the PDU SESSION ESTABLISHMENT REQUEST message. The PDU SESSION ESTABLISHMENT REQUEST message may include the DNN or the combination of DNN and S-NSSAI for the UAS service.

In step 603, the AMF 2 transmits the DL NAS TRANSPORT message including the PDU SESSION ESTABLISHMENT REJECT message. The transmission of the DL NAS TRANSPORT message including the PDU SESSION ESTABLISHMENT REJECT message in step 603 may be based, for example, on the fact that the DNN corresponds to the UAS Service and the UE context in step 601 includes information indicating that the UUAA-MM has failed. It may also be based, for example, on the fact that the S-NSSAI corresponds to the UAS Service and the UE context in step 601 includes information indicating that the UUAA-MM has failed. It may be based, for example, on the fact that the DNN corresponds to the UAS Service and the S-NSSAI corresponds to the UAS Service and the UE context in step 601 includes information indicating that the UUAA-MM has failed. The DL NAS TRANSPORT message may include a failure cause value. The failure cause value may indicate that the UUAA-MM has failed or that the UUAA-MM has failed, because it did not include the CAA-Level UAV ID. For example, but not limited to, 5GMM cause "CAA-Level UAV ID is missing" may be acceptable.

If the DNN or combination of the DNN and S-NSSAI transmitted from the UE 1 with the PDU SESSION ESTABLISHMENT REQUEST message is for the UAS Service and the UE 1 receives the PDU SESSION ESTABLISHMENT REJECT message with the above failure cause in step 603, it may notify the upper layer of the failure cause. In another example, if the DNN or the combination of the DNN and S-NSSAI transmitted from the UE 1 with the PDU SESSION ESTABLISHMENT REQUEST message is for the UAS Service and the UE 1 receives the PDU SESSION ESTABLISHMENT REJECT message with the above failure cause in step 603, it may de-register locally. In addition, the UE 1 may perform the registration procedure including the CAA-Level UAV ID.

### <Fourth example embodiment>

This example embodiment provides an operation of the AMF 2 in the UUAA-SM procedure. A configuration example of a cellular network according to this example embodiment may be similar to the example shown in Fig. 1.

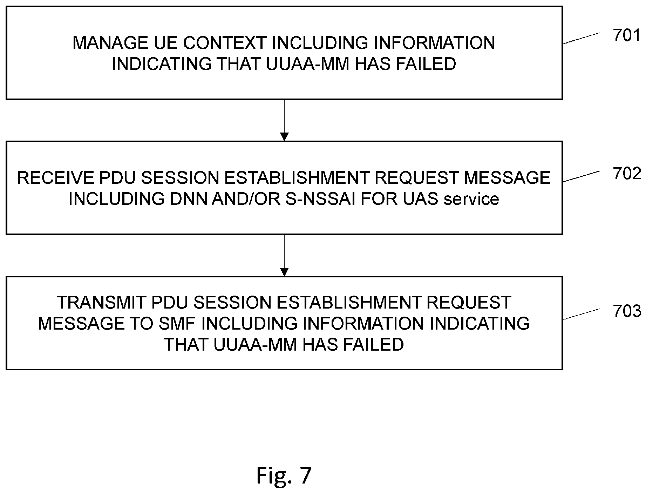

Fig. 7 is a flowchart showing an example of the operation of the AMF 2 according to this example embodiment. In step 701, the AMF 2 manages the UE context of the UE 1 in the RM-REGISTERED state. The UE context includes information indicating that the UE 1 has failed UUAA-MM by the time it generates the UE context. If the UE 1 that supports UUAA-MM in the subscription information does not include the CAA-Level UAV ID in the registration request message during the registration procedure, the AMF 2 grants registration but includes in the UE context information indicating that the UUAA-MM has failed.

In step 702, the AMF 2 receives a PDU SESSION ESTABLISHMENT REQUEST message from UE 1 for the UAS service. AMF 2 determines whether it is a PDU SESSION ESTABLISHMENT REQUEST message for the UAS service based on the DNN included in the UL NAS TRANSPORT message including the PDU SESSION ESTABLISHMENT REQUEST message, or the combination of the DNN and S-NSSAI. If the CAA-Level UAV ID of the UE 1 is set as the Service Level Device Identity in the UL NAS TRANSPORT message including the PDU SESSION ESTABLISHMENT REQUEST message, the AMF 2 may determine whether it is the PDU SESSION ESTABLISHMENT REQUEST message for the UAS service.

In step 703, the AMF 2 transmits the PDU SESSION ESTABLISHMENT REQUEST message to the SMF 3 together with a value indicating that the UUAA-MM has failed or a value indicating that the UUAA-MM has failed, because it did not include the CAA-Level UAV ID.

According to the operation shown in Fig. 7, the AMF 2 can prevent the UAS service from being used by the UE 1 which has failed the UUAA-MM procedure. In other words, the AMF 2 can prevent the UAS service from being used by the UAV authentication and unauthorized UEs. Specifically, the AMF 2 receives from the UE 1 a UL NAS TRANSPORT message including the PDU SESSION ESTABLISHMENT REQUEST message with a DNN or a combination of DNN and S-NSSAI for the UAS Service. If the UE context of the UE 1 held by the AMF 2 includes information indicating that the UUAA-MM has failed, the AMF 2 transmits to the SMF 3 information indicating that the UUAA-MM has failed or that the UUAA-MM has failed because it did not include the CAA-Level UAV ID. The information indicating that the UUAA-MM has failed or that the UUAA-MM has failed by not including the CAA-Level UAV ID may be, in particular, but not limited to, "UUAA-MM failed due to missing CAA-Level UAV ID" .

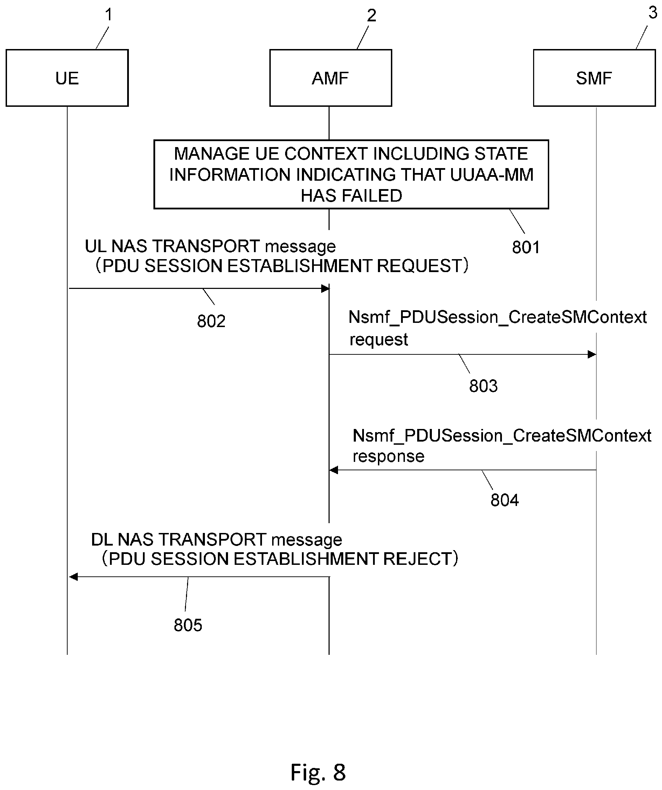

Fig. 8 shows an example of the UUAA-SM procedure in this example embodiment. In step 801, the AMF 2 manages the UE context of the UE 1 that is in the RM-REGISTERED state. The UE context includes information indicating that the UE 1 has failed the UUAA-MM by the time it generates the UE context.

In step 802, the AMF 2 receives the UL NAS TRANSPORT message including the PDU SESSION ESTABLISHMENT REQUEST message. The PDU SESSION ESTABLISHMENT REQUEST message may include the DNN or the combination of DNN and S-NSSAI for the UAS service.

In step 803, the AMF 2 invokes a Nsmf_PDUSession_CreateSMContext request service operation. The service operation may be invoked with information indicating that the UAA-MM has failed or that the UUAA-MM has failed, because it did not include the CAA-Level UAV ID.

In step 804, the SMF 3 transmits a Nsmf_PDUSession_CreateSMContext response to the AMF 2 with the information indicating that the UUAA-MM has failed or that the UUAA-MM has failed, because it did not include the CAA-Level UAV ID. Specifically, but not limited to, as an application error, "SERVICE_NOT_AUTHORIZED" or "SERVICE_NOT ALLOWED" may be set in the Nsmf_PDUSession_CreateSMContext respose.

In step 805, the AMF 2 transmits the DL NAS TRANSPORT message including a PDU SESSION ESTABLISHMENT REJECT message. The DL NAS TRANSPORT message may include a failure cause value. The failure cause value may indicate that the UUAA-MM has failed or that the UUAA-MM failed because it did not include the CAA-Level UAV ID. For example, but not limited to, the failure cause value may be 5GSM cause "CAA-Level UAV ID is missing".

If the DNN or the combination of the DNN and S-NSSAI transmitted from the UE 1 with the PDU SESSION ESTABLISHMENT REQUEST message is for the UAS Service and the UE 1 receives the PDU SESSION ESTABLISHMENT REJECT message with the above failure cause in step 805, it may notify the upper layer of the failure cause. In another example, if the DNN or the combination of the DNN and S-NSSAI transmitted from the UE 1 with the PDU SESSION ESTABLISHMENT REQUEST message is for the UAS Service and the UE 1 receives the PDU SESSION ESTABLISHMENT REJECT message with the above failure cause in step 805, it may de-register locally. In addition, the UE 1 may perform the registration procedure including the CAA-Level UAV ID.

### <Fifth example embodiment>

This example embodiment provides an operation of the SMF 3 in the UUAA-SM procedure. A configuration example of a cellular network according to this example embodiment may be similar to the example shown in Fig. 1.

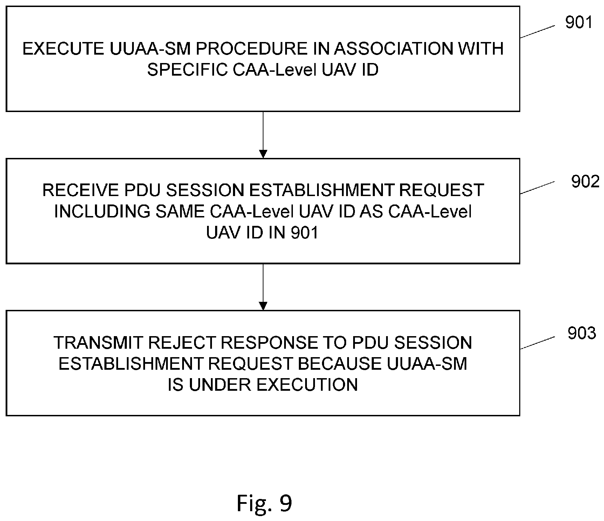

Fig. 9 is a flowchart showing an example of the operation of the SMF 3 according to this example embodiment. In step 901, the SMF 3 executes the UUAA-SM procedure in association with a specific CAA-Level UAV ID (service-level device ID). For example, the UUAA-SM procedure associated with the UAV ID assigned to the USS may be performed.

In step 902, the SMF 3 receives from the UE 1 the PDU session establishment request that includes the same CAA-Level UAV ID as the one associated with the UUAA-SM under execution. For example, while executing the UUAA-SM procedure in step 901, the SMF 3 may receive from the UE 1 a message of the session establishment request that includes the same UAV ID as the one in step 901.

In step 903, the SMF 3 rejects the PDU session establishment request received in step 902, because it is executing the UUAA-SM associated with the CAA-Level UAV ID. Specifically, the SMF 3 transmits to the UE 1 the PDU SESSION ESTABLISHMENT REJECT message including a cause reason value indicating that the UUAA-SM associated with the CAA-Level UAV ID is being executed. The cause reason value may be a 5GSM Cause value. The cause reason value may also be referred to as a failure cause. The cause reason value may also indicate a rejection based on the fact that the UUAA-SM procedure is being executed for the UAV ID.

According to the operation shown in Fig. 9, the SMF 3 can control the PDU session establishment requests during the execution of the UUAA-SM procedure. Thus, the SMF 3 can prevent a collision between the UUAA-SM procedure and the PDU session establishment procedure.

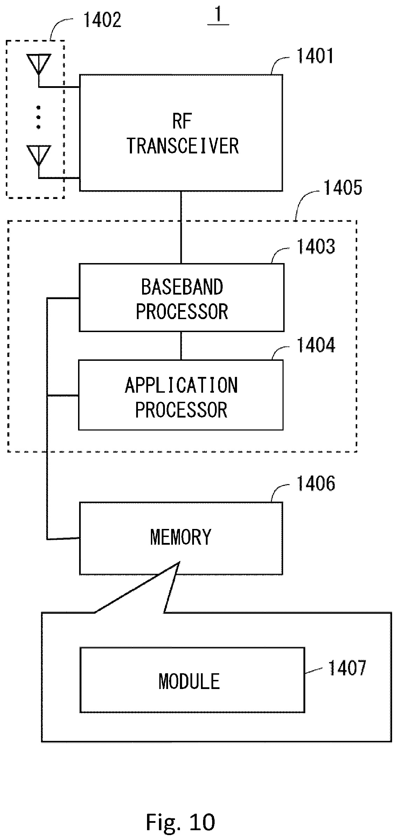

The following provides configuration examples of the UE 1, AMF 2, SMF 3, and UAS-NF 9 according to the above-described example embodiments. Fig. 10 is a block diagram showing a configuration example of the UE 1. A Radio Frequency (RF) transceiver 1401 performs analog RF signal processing to communicate with NG-RAN nodes. The RF transceiver 1401 may include a plurality of transceivers. The analog RF signal processing performed by the RF transceiver 1401 includes frequency up-conversion, frequency down-conversion, and amplification. The RF transceiver 1401 is coupled to an antenna array 1402 and a baseband processor 1403. The RF transceiver 1401 receives modulated symbol data (or OFDM symbol data) from the baseband processor 1403, generates a transmission RF signal, and supplies the transmission RF signal to the antenna array 1402. Further, the RF transceiver 1401 generates a baseband reception signal based on a reception RF signal received by the antenna array 1402 and supplies the baseband reception signal to the baseband processor 1403. The RF transceiver 1401 may include an analog beamformer circuit for beam forming. The analog beamformer circuit includes, for example, a plurality of phase shifters and a plurality of power amplifiers.

The baseband processor 1403 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame), (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1403 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. Further, the control-plane processing performed by the baseband processor 1403 may include processing of Non-Access Stratum (NAS) protocols, Radio Resource Control (RRC) protocols, and MAC Control Elements (CEs).

The baseband processor 1403 may perform Multiple Input Multiple Output (MIMO) encoding and pre-coding for beam forming.

The baseband processor 1403 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1404 described in the following.

The application processor 1404 is also referred to as a CPU, an MPU, a microprocessor, or a processor core. The application processor 1404 may include a plurality of processors (or processor cores). The application processor 1404 loads a system software program (Operating System (OS)) and various application programs (e.g., a call application, a WEB browser, a mailer, a camera operation application, and a music player application) from a memory 1406 or from another memory (not illustrated) and executes these programs, thereby providing various functions of the UE 1.

In some implementations, as represented by a dashed line (1405) in Fig. 10, the baseband processor 1403 and the application processor 1404 may be integrated on a single chip. In other words, the baseband processor 1403 and the application processor 1404 may be implemented in a single System on Chip (SoC) device 1405. An SoC device may be referred to as a Large-Scale Integration (LSI) or a chipset.

The memory 1406 is a volatile memory, a non-volatile memory, or a combination thereof. The memory 1406 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1406 may include, for example, an external memory device that can be accessed from the baseband processor 1403, the application processor 1404, and the SoC 1405. The memory 1406 may include an internal memory device that is integrated into the baseband processor 1403, the application processor 1404, or the SoC 1405. Further, the memory 1406 may include a memory in a Universal Integrated Circuit Card (UICC).

The memory 1406 may store one or more software modules (computer programs) 1407 including instructions and data to perform the processing by the UE 1 described in the above example embodiments. In some implementations, the baseband processor 1403 or the application processor 1404 may load these software modules 1407 from the memory 1406 and execute the loaded software modules, thereby performing the processing of the UE 1 described in the above example embodiments with reference to the drawings.

The control-plane processing and operations performed by the UE 1 described in the above example embodiments can be achieved by elements other than the RF transceiver 1401 and the antenna array 1402, i.e., achieved by the memory 1406, which stores the software modules 1407, and one or both of the baseband processor 1403 and the application processor 1404.

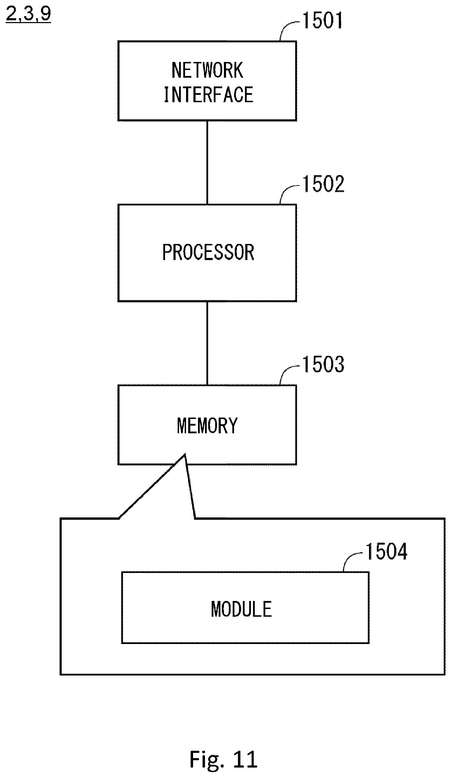

Fig. 11 shows a configuration example of the AMF 2. The SMF 3 and UAS-NF 9 may also be configured as shown in Fig. 11. Referring to Fig. 11, the AMF 2 includes a network interface 1501, a processor 1502, and a memory 1503. The network interface 1501 is used to communicate, for example, with RAN nodes and with other network functions (NFs) or nodes in the 5GC. The other NFs or nodes in the 5GC include, for example, UDM, AUSF, SMF, UPF, and PCF. The network interface 1501 may include, for example, a network interface card (NIC) conforming to the IEEE 802.3 series.

The processor 1502 may be, for example, a microprocessor, a Micro Processing Unit (MPU), or a Central Processing Unit (CPU). The processor 1502 may include a plurality of processors.

The memory 1503 is composed of a volatile memory and a nonvolatile memory. The memory 1503 may include multiple memory devices that are physically independent. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1503 may include a storage located apart from the processor 1502. In this case, the processor 1502 may access the memory 1503 via the network interface 1501 or an I/O interface (not illustrated).

The memory 1503 may store one or more software modules (computer programs) 1504 including instructions and data to perform the processing of the AMF 2 described in the above example embodiments. In some implementations, the processor 1502 may be configured to load the one or more software modules 1504 from the memory 1503 and execute the loaded software modules, thereby performing the processing of the AMF 2 described in the above example embodiments.

As described above with reference to Figs. 10 and 11, each of the processors that the UE 1, AMF 2, and SMF 3 according to the above example embodiments include executes one or more programs including instructions for causing a computer to execute an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

The wireless terminal (User Equipment (UE)) in the present disclosure is an entity to be connected to a network via a wireless interface. It should be noted that the radio terminal (UE) in the present disclosure is not limited to a dedicated communication device, and it may be any device as follows having the communication functions herein explained.

The terms "User Equipment (UE)" (as the term is used by 3GPP), "mobile station", "mobile terminal", "mobile device", and "radio terminal (wireless device)" are generally intended to be synonymous with one another. The UE may include standalone mobile stations, such as terminals, cell phones, smartphones, tablets, cellular IoT (internet of things) terminals, and IoT devices. The terms "UE" and "radio terminal" also encompass devices that remain stationary for a long period of time.

A UE may, for example, be an item of equipment for production or manufacture and/or an item of energy related machinery (for example equipment or machinery such as: boilers; engines; turbines; solar panels; wind turbines; hydroelectric generators; thermal power generators; nuclear electricity generators; batteries; nuclear systems and/or associated equipment; heavy electrical machinery; pumps including vacuum pumps; compressors; fans; blowers; oil hydraulic equipment; pneumatic equipment; metal working machinery; manipulators; robots and/or their application systems; tools; molds or dies; rolls; conveying equipment; elevating equipment; materials handling equipment; textile machinery; sewing machines; printing and/or related machinery; paper projecting machinery; chemical machinery; mining and/or construction machinery and/or related equipment; machinery and/or implements for agriculture, forestry and/or fisheries; safety and/or environment preservation equipment; tractors; bearings; precision bearings; chains; gears; power transmission equipment; lubricators; valves; pipe fittings; and/or application systems for any of the previously mentioned equipment or machinery, etc.).

A UE may, for example, be an item of transport equipment (for example transport equipment such as: rolling stocks; motor vehicles; motorcycles; bicycles; trains; buses; carts; rickshaws; ships and other watercraft; aircraft; rockets; satellites; drones; balloons, etc.).

A UE may, for example, be an item of information and communication equipment (for example information and communication equipment such as: electronic computer and related equipment; communication and related equipment; electronic components, etc.). A UE may, for example, be an item of refrigeration equipment, a refrigeration application product and equipment, trade and/or service industry equipment, a vending machine, an automatic service machine, an office machine or equipment, a consumer electronic and electronic appliance (for example a consumer electronic appliance such as: audio equipment; a speaker; a radio; video equipment; a television; an oven range; a rice cooker; a coffee maker; a dishwasher; a washing machine; dryers, a fan, an exhaust fan and related products, a vacuum cleaner, etc.).

A UE may, for example, be an electrical application system or equipment (for example an electrical application system or equipment such as: an x-ray system; a particle accelerator; radio isotope equipment; sonic equipment; electromagnetic application equipment; electronic power application equipment, etc.).

A UE may, for example, be an electronic lamp, a luminaire, a measuring instrument, an analyzer, a tester, or a surveying or sensing instrument (for example a surveying or sensing instrument such as: a smoke alarm; a human alarm sensor; a motion sensor; a wireless tag, etc.), a watch or clock, a laboratory instrument, optical apparatus, medical equipment and/or system, a weapon, an item of cutlery, a hand tool, or the like.

A UE may, for example, be a wireless-equipped personal digital assistant or related equipment (such as a wireless card or module designed for attachment to or for insertion into another electronic device (for example a personal computer, electrical measuring machine)).

A UE may be a device or a part of a system that provides applications, services, and solutions described below, as to "internet of things (IoT)", using a variety of wired and/or wireless communication technologies. IoT devices (or "things") may be equipped with appropriate electronics, software, sensors, network connectivity, and/or the like, which enable these devices to collect and exchange data with each other and with other communication devices. IoT devices may include automated equipment that follow software instructions stored in an internal memory. IoT devices may operate without requiring human supervision or interaction. IoT devices might also remain stationary and/or inactive for a long period of time. IoT devices may be implemented as a part of a (generally) stationary apparatus. IoT devices may also be embedded in nonstationary apparatus (e.g., vehicles) or attached to animals or persons to be monitored/tracked. IoT technology can be implemented on any communication devices that can connect to a communications network for sending/receiving data, regardless of whether such communication devices are controlled by human input or software instructions stored in memory. IoT devices are sometimes also referred to as Machine-Type Communication (MTC) devices, Machine-to-Machine (M2M) communication devices, or Narrow Band-IoT (NB-IoT) UE.

A UE may support one or more IoT or MTC applications.

Some examples of MTC applications are listed in 3GPP TS 22.368 V13.2.0 (2017-01-13), Annex B (the contents of which are incorporated herein by reference). This list is not exhaustive and is intended to be indicative of some examples of MTC applications. In this list, the Service Area of the MTC applications includes Security, Tracking & Tracing, Payment, Health, Remote Maintenance/Control, Metering, and Consumer Devices.

Examples of the MTC applications regarding Security include Surveillance systems, Backup for landline, Control of physical access (e.g., to buildings), and Car/driver security.

Examples of the MTC applications regarding Tacking & Tracing include Fleet Management, Order Management, Telematics insurance: Pay as you drive (PAYD), Asset Tracking, Navigation, Traffic information, Road tolling, and Road traffic optimisation/steering.

Examples of the MTC applications regarding Payment include Point of sales (POS), Vending machines, and Gaming machines.

Examples of the MTC applications regarding Health include Monitoring vital signs, Supporting the aged or handicapped, Web Access Telemedicine points, and Remote diagnostics.

Examples of the MTC applications regarding Remote Maintenance/Control include Sensors, Lighting, Pumps, Valves, Elevator control, Vending machine control, and Vehicle diagnostics.

Examples of the MTC applications regarding Metering include Power, Gas, Water, Heating, Grid control, and Industrial metering.

Examples of the MTC applications regarding Consumer Devices include Digital photo frames, Digital cameras, and eBooks.

Applications, services, and solutions may be an Mobile Virtual Network Operator (MVNO) service/system, an emergency radio communication service/system, a Private Branch exchange (PBX) service/system, a PHS/Digital Cordless Telecommunications service/system, a Point of sales (POS) service/system, an advertise calling service/system, a Multimedia Broadcast and Multicast Service (MBMS) service/system, a Vehicle to Everything (V2X) service/system, a train radio service/system, a location related service/system, a Disaster/Emergency Wireless Communication Service/system, an Internet of Things (IoT) service/system, a community service/system, a video streaming service/system, a femto cell application service/system, a Voice over LTE (VoLTE) service/system, a radio tag service/system, a charging service/system, a radio on demand service/system, a roaming service/system, an activity monitoring service/system, a telecom carrier/communication NW selection service/system, a functional restriction service/system, a Proof of Concept (PoC) service/system, a personal information management service/system, a display video service/system, a non-communication service/system, an ad-hoc NW/Delay Tolerant Networking (DTN) service/system, etc.

The above-described UE categories are merely examples of applications of the technical ideas and example embodiments described in the present disclosure. The UE described in this disclosure is not limited to these examples and various modifications can be made thereto by those skilled in the art.

The above-described example embodiments are merely examples of applications of the technical ideas obtained by the inventors. These technical ideas are not limited to the above-described example embodiments and various modifications can be made thereto.

The whole or part of the example embodiments disclosed above can be described as, but not limited to, the following supplementary notes.

### (Supplementary note 1-1)

A first core network node for performing session management comprising:
a memory; and
at least one processor coupled to the memory, wherein
the at least one processor is configured to receive from a User Equipment (UE) a session establishment request message including an address of a Uncrewed Aerial System (UAS) Service Supplier (USS),
the at least one processor is configured to transmit to a second core network node providing a UAS service an invocation message of a Network Exposure Function (NEF) authentication service including the address of the USS,
the at least one processor is configured to receive a response message to the invocation message from the second core network node,
the at least one processor is configured to transmit to the UE a reject response message to the session establishment request message when the response message includes a failure cause for the USS corresponding to the address of the USS, and
the reject response message includes information indicating a failure of a service related to the USS corresponding to the address of the USS.

### (Supplementary note 1-2)

The first core network node according to supplementary note 1-1, wherein
the failure cause is one of:
an absence of a response from the USS to the authentication request message transmitted by the second core network node to the USS corresponding to the address of the USS in response to the invocation message, and
an inability to identify the USS based on the address of the USS.

### (Supplementary note 1-3)

A User Equipment (UE) comprising:
a memory; and
at least one processor coupled to the memory, wherein
the at least one processor is configured to transmit to a first core network node for performing session management a session establishment request message including an address of an Uncrewed Aerial System (UAS) Service Supplier (USS),
the at least one processor is configured to receive from the first core network node a reject response message to the session establishment request message, when a response message to an invocation message of a Network Exposure Function (NEF) authentication service including the address of the USS received by the first core network node from a second core network node providing a UAS service includes a failure cause for the USS corresponding to the address of the USS, and
the reject response message includes information indicating a failure of a service related to the USS corresponding to the address of the USS.

### (Supplementary note 1-4)

A second core network node providing an Uncrewed Aerial System (UAS) service, the second core network node comprising:
a memory; and
at least one processor coupled to the memory, wherein
the at least one processor is configured to receive from a first core network node for performing session management an invocation message of a Network Exposure Function (NEF) authentication service including an address of a UAS Service Supplier (USS),
the at least one processor is configured to transmit to the first core network node a response message to the invocation message, and
the response message includes a failure cause for the USS corresponding to the address of the USS, thereby causing the first core network node to transmit to an User Equipment (UE) a reject response message to a session establishment request, and
the reject response message includes information indicating a failure of a service related to the USS corresponding to the address of the USS.

### (Supplementary note 1-5)

A third core network node for performing mobility management, the third core network node comprising:
a memory; and
at least one processor coupled to the memory, wherein
the at least one processor is configured to receive from a User Equipment (UE) a session establishment request message including an address of a Uncrewed Aerial System (UAS) Service Supplier (USS),
the at least one processor is configured to transmit to the UE a reject response message to the session establishment request message when a first core network node for performing session management corresponding to the USS address cannot be identified based on the USS address, the reject response message including a failure cause indicating that the first core network node corresponding to the USS address cannot be identified.

### (Supplementary note 1-6)

A method in a first core network node for performing session management, the method comprising:
receiving from a User Equipment (UE) a session establishment request message including an address of a Uncrewed Aerial System (UAS) Service Supplier (USS);
transmitting to a second core network node providing a UAS service an invocation message of a Network Exposure Function (NEF) authentication service including the address of the USS;
receiving a response message to the invocation message from the second core network node; and
transmitting to the UE a reject response message to the session establishment request message when the response message includes a failure cause for the USS corresponding to the address of the USS, the reject response message including information indicating a failure of a service related to the USS corresponding to the address of the USS.

### (Supplementary note 1-7)

A method in a User Equipment (UE), the method comprising:
transmitting to a first core network node for performing session management a session establishment request message including an address of an Uncrewed Aerial System (UAS) Service Supplier (USS); and
receiving from the first core network node a reject response message to the session establishment request message, when a response message to an invocation message of a Network Exposure Function (NEF) authentication service including the address of the USS received by the first core network node from a second core network node providing a UAS service includes a failure cause for the USS corresponding to the address of the USS, the reject response message including information indicating a failure of a service related to the USS corresponding to the address of the USS.

### (Supplementary note 1-8)

A method in a second core network node providing an Uncrewed Aerial System (UAS) service, the method comprising:
receiving from a first core network node for performing session management an invocation message of a Network Exposure Function (NEF) authentication service including an address of a UAS Service Supplier (USS); and
transmitting to the first core network node a response message to the invocation message, wherein
the response message includes a failure cause for the USS corresponding to the address of the USS, thereby causing the first core network node to transmit to an User Equipment (UE) a reject response message to a session establishment request, the reject response message including information indicating a failure of a service related to the USS corresponding to the address of the USS.

### (Supplementary note 1-9)

A method in a third core network node for performing mobility management, the method comprising:
receiving from a User Equipment (UE) a session establishment request message including an address of a Uncrewed Aerial System (UAS) Service Supplier (USS); and
transmitting to the UE a reject response message to the session establishment request message when a first core network node for performing session management corresponding to the USS address cannot be identified based on the USS address, the reject response message including a failure cause indicating that the first core network node corresponding to the USS address cannot be identified.

### (Supplementary note 1-10)

A non-transitory computer readable medium storing a program for causing a computer to execute a method in a first core network node for performing session management, the method comprising:
receiving from a User Equipment (UE) a session establishment request message including an address of a Uncrewed Aerial System (UAS) Service Supplier (USS);
transmitting to a second core network node providing a UAS service an invocation message of a Network Exposure Function (NEF) authentication service including the address of the USS;
receiving a response message to the invocation message from the second core network node; and
transmitting to the UE a reject response message to the session establishment request message when the response message includes a failure cause for the USS corresponding to the address of the USS, the reject response message including information indicating a failure of a service related to the USS corresponding to the address of the USS.

### (Supplementary note 1-11)

A non-transitory computer readable medium storing a program for causing a computer to execute a method in a User Equipment (UE), the method comprising:
transmitting to a first core network node for performing session management a session establishment request message including an address of an Uncrewed Aerial System (UAS) Service Supplier (USS); and
receiving from the first core network node a reject response message to the session establishment request message, when a response message to an invocation message of a Network Exposure Function (NEF) authentication service including the address of the USS received by the first core network node from a second core network node providing a UAS service includes a failure cause for the USS corresponding to the address of the USS, the reject response message including information indicating a failure of a service related to the USS corresponding to the address of the USS.

### (Supplementary note 1-12)

A non-transitory computer readable medium storing a program for causing a computer to execute a method in a second core network node providing an Uncrewed Aerial System (UAS) service, the method comprising:
receiving from a first core network node for performing session management an invocation message of a Network Exposure Function (NEF) authentication service including an address of a UAS Service Supplier (USS); and
transmitting to the first core network node a response message to the invocation message, wherein the response message includes a failure cause for the USS corresponding to the address of the USS, thereby causing the first core network node to transmit to an User Equipment (UE) a reject response message to a session establishment request, the reject response message including information indicating a failure of a service related to the USS corresponding to the address of the USS.

### (Supplementary note 1-13)

A non-transitory computer readable medium storing a program for causing a computer to execute a method in third core network node for performing mobility management, the method comprising:
receiving from a User Equipment (UE) a session establishment request message including an address of a Uncrewed Aerial System (UAS) Service Supplier (USS); and
transmitting to the UE a reject response message to the session establishment request message when a first core network node for performing session management corresponding to the USS address cannot be identified based on the USS address, the reject response message including a failure cause indicating that the first core network node corresponding to the USS address cannot be identified.

### (Supplementary note 2-1)

A User Equipment (UE) comprising:
a memory; and
at least one processor coupled to the memory, wherein
the at least one processor is configured to transmit to a first core network node for performing session management a first session establishment request message requesting a first session establishment for a Data Network Name (DNN) corresponding to a Uncrewed Aerial System (UAS) Service Supplier (USS), and
the at least one processor is configured to interrupt transmission to the first core network node, before receiving a response to the session establishment request message, of a second session establishment request message requesting establishment of a second session based an association between a combination of the DNN and a first Single Network Slice Selection Assistance Information (S-NSSAI) among the S-NSSAI and the service related to the UAS when the at least one processor detects a trigger requesting the establishment of the second session for the combination of the DNN and the S-NSSAI, and
the second session is different from the first session.

### (Supplementary note 2-2)

The UE according to supplementary note 2-1, wherein the at least one processor is configured to transmit to the first core network node, before receiving a response to the session establishment request message, a second session establishment request message requesting establishment of a second session based on absence of an association between a combination of the DNN and a second Single Network Slice Selection Assistance Information (S-NSSAI) among the S-NSSAI and the service related to the UAS when the at least one processor detects a trigger requesting the establishment of the second session for the combination of the DNN and the S-NSSAI.

### (Supplementary note 2-3)

A method in a User Equipment (UE), the method comprising:
transmitting to a first core network node for performing session management a first session establishment request message requesting a first session establishment for a Data Network Name (DNN) corresponding to a Uncrewed Aerial System (UAS) Service Supplier (USS); and
interrupting transmission to the first core network node, before receiving a response to the session establishment request message, of a second session establishment request message requesting establishment of a second session based an association between a combination of the DNN and a first Single Network Slice Selection Assistance Information (S-NSSAI) among the S-NSSAI and a service related to the UAS when the at least one processor detects a trigger requesting the establishment of the second session for the combination of the DNN and the S-NSSAI, wherein the second session is different from the first session.

### (Supplementary note 2-4)

A non-transitory computer readable medium storing a program for causing a computer to execute a method in a User Equipment (UE), the method comprising:
transmitting to a first core network node for performing session management a first session establishment request message requesting a first session establishment for a Data Network Name (DNN) corresponding to a Uncrewed Aerial System (UAS) Service Supplier (USS); and
interrupting transmission to the first core network node, before receiving a response to the session establishment request message, of a second session establishment request message requesting establishment of a second session based an association between a combination of the DNN and a first Single Network Slice Selection Assistance Information (S-NSSAI) among the S-NSSAI and a service related to the UAS when the at least one processor detects a trigger requesting the establishment of the second session for the combination of the DNN and the S-NSSAI, wherein the second session is different from the first session.

### (Supplementary note 3-1)

A third core network node for mobility management, the third core network node comprising:
a memory; and
at least one processor coupled to the memory, wherein
the at least one processor is configured to manage a UE context including information indicating that a User Equipment (UE) has failed Uncrewed Aerial Vehicle (UAV) authentication and authorization procedure (UUAA-MM procedure) in the mobility management,
the at least one processor is configured to receive from the UE a session establishment request message including at least one of a Data Network Name (DNN) corresponding to a Uncrewed Aerial System (UAS) service and Single Network Slice Selection Assistance Information (S-NSSAI) corresponding to the UAS service, and
the at least one processor is configured to transmit to the UE a reject response message to the session establishment request message based on information indicating that the UE has failed the UUAA-MM procedure.

### (Supplementary note 3-2)

The third core network node according to supplementary note 3-1, wherein the reject response message includes a failure cause indicating a rejection based on a failure of the UE in the UUAA-MM procedure.

### (Supplementary note 3-3)

The third core network node according to supplementary note 3-1 or 3-2, wherein the at least one processor is configured not to forward to a first core network node for performing session management the session establishment request message based on the information indicating that the UE has failed the UUAA-MM procedure.

### (Supplementary note 3-4)

A User Equipment (UE) comprising:
a memory; and
at least one processor coupled to the memory, wherein
the at least one processor is configured to transmit to a third core network node for performing mobility management a session establishment request message including at least one of a Data Network Name (DNN) corresponding to a Uncrewed Aerial System (UAS) service and Single Network Slice Selection Assistance Information (S-NSSAI) corresponding to the UAS service,
the at least one processor is configured to receive from the third core network node a reject response message to the session establishment request message, and
the reject response message is transmitted from the third core network node to the UE in response to a UE context managed by the third core network node including information indicating that the UE has failed Uncrewed Aerial Vehicle (UAV) authentication and authorization procedure (UUAA-MM procedure) in the mobility management.

### (Supplementary note 3-5)

A method in a third core network node for mobility management, the method comprising:
managing a UE context including information indicating that a User Equipment (UE) has failed Uncrewed Aerial Vehicle (UAV) authentication and authorization procedure (UUAA-MM procedure) in the mobility management;
receiving from the UE a session establishment request message including at least one of a Data Network Name (DNN) corresponding to a Uncrewed Aerial System (UAS) service and Single Network Slice Selection Assistance Information (S-NSSAI) corresponding to the UAS service; and
transmitting to the UE a reject response message to the session establishment request message based on information indicating that the UE has failed the UUAA-MM procedure.

### (Supplementary note 3-6)

A method in a User Equipment (UE), the method comprising:
transmitting to a third core network node for performing mobility management a session establishment request message including at least one of a Data Network Name (DNN) corresponding to a Uncrewed Aerial System (UAS) service and Single Network Slice Selection Assistance Information (S-NSSAI) corresponding to the UAS service; and
receiving from the third core network node a reject response message to the session establishment request message, wherein
the reject response message is transmitted from the third core network node to the UE in response to a UE context managed by the third core network node including information indicating that the UE has failed Uncrewed Aerial Vehicle (UAV) authentication and authorization procedure (UUAA-MM procedure) in the mobility management.

### (Supplementary note 3-7)

A non-transitory computer readable medium storing a program for causing a computer to execute a method in a third core network node for mobility management, the method comprising:
managing a UE context including information indicating that a User Equipment (UE) has failed Uncrewed Aerial Vehicle (UAV) authentication and authorization procedure (UUAA-MM procedure) in the mobility management;
receiving from the UE a session establishment request message including at least one of a Data Network Name (DNN) corresponding to a Uncrewed Aerial System (UAS) service and Single Network Slice Selection Assistance Information (S-NSSAI) corresponding to the UAS service; and
transmitting to the UE a reject response message to the session establishment request message based on information indicating that the UE has failed the UUAA-MM procedure.

### (Supplementary note 3-8)

A non-transitory computer readable medium storing a program for causing a computer to execute a method in a User Equipment (UE), the method comprising:
transmitting to a third core network node for performing mobility management a session establishment request message including at least one of a Data Network Name (DNN) corresponding to a Uncrewed Aerial System (UAS) service and Single Network Slice Selection Assistance Information (S-NSSAI) corresponding to the UAS service; and
receiving from the third core network node a reject response message to the session establishment request message, wherein
the reject response message is transmitted from the third core network node to the UE in response to a UE context managed by the third core network node including information indicating that the UE has failed Uncrewed Aerial Vehicle (UAV) authentication and authorization procedure (UUAA-MM procedure) in the mobility management.

### (Supplementary note 4-1)

A third core network node for mobility management, the third core network node comprising:
a memory; and
at least one processor coupled to the memory, wherein
the at least one processor is configured to manage a UE context including information indicating that a User Equipment (UE) has failed Uncrewed Aerial Vehicle (UAV) authentication and authorization procedure (UUAA-MM procedure) in mobility management;
the at least one processor is configured to receive from the UE a session establishment request message requesting establishment of a first session, and the session establishment request message including at least one of a Data Network Name (DNN) corresponding to a Uncrewed Aerial System (UAS) service and Single Network Slice Selection Assistance Information (S-NSSAI) corresponding to the UAS service, and
the at least one processor is configured to transmit to a first core network node for performing session management information indicating that the UE has failed the UUAA-MM procedure and a session establishment service invocation message for the first session.

### (Supplementary note 4-2)

The third core network node according to supplementary note 4-1, wherein
the at least one processor is configured to transmit to the UE a reject response message to the session establishment request message when the reject response message to the session establishment service invocation message is received from the first core network node, and
the reject response message includes a failure cause indicating a rejection based on a failure of the UE in the UUAA-MM procedure.

### (Supplementary note 4-3)

A User Equipment (UE) comprising:
a memory; and
at least one processor coupled to the memory, wherein
the at least one processor is configured to transmit to a third core network node for performing mobility management a session establishment request message requesting establishment of a first session, the session establishment request message including at least one of a Data Network Name (DNN) corresponding to a Uncrewed Aerial System (UAS) service and Single Network Slice Selection Assistance Information (S-NSSAI) corresponding to the UAS service,
the at least one processor is configured to receive from the third core network node a reject response message to the session establishment request message, the reject response message including a failure cause indicating that the UE has failed Uncrewed Aerial Vehicle (UAV) authentication and authorization procedure (UUAA-MM procedure) in the mobility management.

### (Supplementary note 4-4)

A method in a third core network node for mobility management, the method comprising:
managing a UE context including information indicating that a User Equipment (UE) has failed Uncrewed Aerial Vehicle (UAV) authentication and authorization procedure (UUAA-MM procedure) in mobility management;
receiving from the UE a session establishment request message requesting establishment of a first session; and
transmitting to a first core network node for performing session management information indicating that the UE has failed the UUAA-MM procedure and a session establishment service invocation message for the first session, the session establishment request message including at least one of a Data Network Name (DNN) corresponding to a Uncrewed Aerial System (UAS) service and Single Network Slice Selection Assistance Information (S-NSSAI) corresponding to the UAS service.

### (Supplementary note 4-5)

A method in a User Equipment (UE), the method comprising:
transmitting to a third core network node for performing mobility management a session establishment request message requesting establishment of a first session; and
receiving from the third core network node a reject response message to the session establishment request message, wherein
the session establishment request message includes at least one of a Data Network Name (DNN) corresponding to a Uncrewed Aerial System (UAS) service and Single Network Slice Selection Assistance Information (S-NSSAI) corresponding to the UAS service, and
the reject response message includes a failure cause indicating that the UE has failed Uncrewed Aerial Vehicle (UAV) authentication and authorization procedure (UUAA-MM procedure) in the mobility management.

### (Supplementary note 4-6)

A non-transitory computer readable medium storing a program for causing a computer to execute a method in a third core network node for mobility management, the method comprising:
managing a UE context including information indicating that a User Equipment (UE) has failed Uncrewed Aerial Vehicle (UAV) authentication and authorization procedure (UUAA-MM procedure) in mobility management;
receiving from the UE a session establishment request message requesting establishment of a first session; and
transmitting to a first core network node for performing session management information indicating that the UE has failed the UUAA-MM procedure and a session establishment service invocation message for the first session, the session establishment request message including at least one of a Data Network Name (DNN) corresponding to a Uncrewed Aerial System (UAS) service and Single Network Slice Selection Assistance Information (S-NSSAI) corresponding to the UAS service.

### (Supplementary note 4-7)

A non-transitory computer readable medium storing a program for causing a computer to execute a method in a User Equipment (UE), the method comprising:
transmitting to a third core network node for performing mobility management a session establishment request message requesting establishment of a first session; and
receiving from the third core network node a reject response message to the session establishment request message, wherein
the session establishment request message includes at least one of a Data Network Name (DNN) corresponding to a Uncrewed Aerial System (UAS) service and Single Network Slice Selection Assistance Information (S-NSSAI) corresponding to the UAS service, and
the reject response message includes a failure cause indicating that the UE has failed Uncrewed Aerial Vehicle (UAV) authentication and authorization procedure (UUAA-MM procedure) in the mobility management.

### (Supplementary note 5-1)

A first core network node for performing session management, the first core network node comprising:
a memory;
at least one processor coupled to the memory, wherein
the at least one processor is configured to perform Uncrewed Aerial Vehicle (UAV) authentication and authorization procedure in session management (UUAA-SM procedure) associated with a UAV ID assigned to a Uncrewed Aerial System (UAS) Service Supplier (USS),
the at least one processor is configured to transmit to a User Equipment (UE) a reject response message to the session establishment request message when a session establishment request message including the UAVID is received from the UE during the execution of the UUAA-SM procedure, and
the reject response message includes a failure cause indicating that a rejection is based on the UUAA-SM procedure being executed on the UAVID.

### (Supplementary note 5-2)

A method in a first core network node for performing session management, the method comprising:
performing Uncrewed Aerial Vehicle (UAV) authentication and authorization procedure in session management (UUAA-SM procedure) associated with a UAV ID assigned to a Uncrewed Aerial System (UAS) Service Supplier (USS); and
transmitting to a User Equipment (UE) a reject response message to the session establishment request message when a session establishment request message including the UAVID is received from the UE during the execution of the UUAA-SM procedure, wherein the reject response message includes a failure cause indicating that a rejection is based on the UUAA-SM procedure being executed on the UAVID.

### (Supplementary note 5-3)

A non-transitory computer readable medium storing a program for causing a computer to execute a method in a first core network node for performing session management, the method comprising:
performing Uncrewed Aerial Vehicle (UAV) authentication and authorization procedure in session management (UUAA-SM procedure) associated with a UAV ID assigned to a Uncrewed Aerial System (UAS) Service Supplier (USS); and
transmitting to a User Equipment (UE) a reject response message to the session establishment request message when a session establishment request message including the UAVID is received from the UE during the execution of the UUAA-SM procedure, wherein the reject response message includes a failure cause indicating that a rejection is based on the UUAA-SM procedure being executed on the UAVID.

This application claims the priority based on Japanese Patent Application No. 2021-160148 filed September 29, 2021, disclosure of which is incorporated by reference in its entirety.

### Reference Signs List

- 1: UE
- 2: AMF
- 3: SMF
- 4: AUSF
- 5: AN
- 6: UPF
- 7: DN
- 8: UDM
- 9: UAS-NF
- 10: NSSAAF
- 1403: BASEBAND PROCESSOR
- 1404: APPLICATION PROCESSOR
- 1406: MEMORY
- 1407: MODULE
- 1502: PROCESSOR
- 1503: MEMORY
- 1504: MODULE

## Claims

1. A first node for session management in a core network, the first node comprising:
transmission means for transmitting a first message to a second node for Uncrewed Aerial Vehicle (UAV) authentication and authorization in the core network, the first message requesting the second node to invoke a service operation for the UAV authentication and authorization for a third node related to an Uncrewed Aerial System (UAS) Service Supplier (USS); and
reception means for receiving from the second node a first response message in response to the first message when a response to the invocation of the service operation is not received from the third node within a predetermined period of time, the first response message including a cause value set in PEER NOT RESPONDING.

2. The first node according to claim 1, wherein the first response message is HTTP status code 504 Gateway Timeout.

3. The first node according to claim 1, further comprising:
reception means for receiving from a User Equipment (UE) a PDU SESSION ESTABLISHMENT REQUEST message for a UAS service, the PDU SESSION ESTABLISHMENT REQUEST message including an address of the third node; and
transmission means for transmitting, after receiving the first response message, a PDU SESSION ESTABLISHMENT REJECT message to the UE including a failure cause related to the UAV authentication and authorization.

4. The first node according to claim 3, wherein the address of the third node is set in Service-level-AA container IE included in the PDU SESSION ESTABLISHMENT REQUEST message, and when the first node receives the first response message, the first node transmits the PDU SESSION ESTABLISHMENT REJECT message to the UE.

5. The first node according to claim 1, wherein
the first node is a Session Mobility Management Function (SMF),
the second node is an Uncrewed Aerial System Network Function (UAS-NF), and
the third node is a USS.

6. A second node in a core network for Uncrewed Aerial Vehicle (UAV) authentication and authorization, the second node comprising:
reception means for receiving a first message requesting the UAV authentication from the first node for session management in the core network;
transmission means for transmitting a second message requesting a service operation for the UAV authentication and authorization to a third node for an Uncrewed Aerial System (UAS) Service Supplier (USS) after receiving the first message; and
transmission means for transmitting to the first node a first response message in response to the first message when a response to the second message is not received from the third node during a predetermined period of time, the first response message including a cause value set in PEER NOT RESPONDING.

7. The second node according to claim 6, wherein the first response message is HTTP status code 504 Gateway Timeout.

8. The second node according to claim 6, wherein the first response message causes the first node to transmit to a User Equipment (UE) a PDU SESSION ESTABLISHMENT REJECT message including a failure cause related to the UAV authentication and authorization.

9. The second node according to claim 6, wherein
the first node is a Session Mobility Management Function (SMF),
the second node is an Uncrewed Aerial System Network Function (UAS-NF), and
the third node is a USS.

10. A method performed by a first node for session management in a core network, the method comprising:
transmitting a first message to a second node for Uncrewed Aerial Vehicle (UAV) authentication and authorization in the core network, the first message requesting the second node to invoke a service operation for the UAV authentication and authorization for a third node related to an Uncrewed Aerial System (UAS) Service Supplier (USS); and
receiving a first response message from the second node in response to the first message when a response to the invocation of the service operation is not received from the third node within a predetermined period of time, the first response message including a cause value set in PEER NOT RESPONDING.

11. The method according to claim 10, wherein the first response message is HTTP status code 504 Gateway Timeout.

12. The method according to claim 10, further comprising:
receiving from a User Equipment (UE) a PDU SESSION ESTABLISHMENT REQUEST message for a UAS service, the PDU SESSION ESTABLISHMENT REQUEST message including an address of the third node; and
transmitting, after receiving the first response message, a PDU SESSION ESTABLISHMENT REJECT message to the UE including a failure cause related to the UAV authentication and authorization.

13. The method according to claim 12, wherein the address of the third node is set in Service-level-AA container IE included in the PDU SESSION ESTABLISHMENT REQUEST message, and when the first node receives the first response message, the first node transmits the PDU SESSION ESTABLISHMENT REJECT message to the UE.

14. The method according to claim 10, wherein
the first node is a Session Mobility Management Function (SMF),
the second node is an Uncrewed Aerial System Network Function (UAS-NF), and
the third node is a USS.

15. A method performed by second node in a core network for Uncrewed Aerial Vehicle (UAV) authentication and authorization, the method comprising:
receiving a first message requesting the UAV authentication from the first node for session management in the core network;
transmitting a second message requesting a service operation for the UAV authentication and authorization to a third node for a Uncrewed Aerial System (UAS) Service Supplier (USS) after receiving the first message; and
transmitting to the first node a first response message in response to the first message when a response to the second message is not received from the third node during a predetermined period of time, the first response message including a cause value set in PEER NOT RESPONDING.

16. The method according to claim 15, wherein the first response message is HTTP status code 504 Gateway Timeout.

17. The method according to claim 15, wherein the first response message causes the first node to transmit to a User Equipment (UE) a PDU SESSION ESTABLISHMENT REJECT message including a failure cause related to the UAV authentication and authorization.

18. The method according to claim 15, wherein
the first node is an Access and Session Management Function (SMF),
the second node is an Uncrewed Aerial System Network Function (UAS-NF), and
the third node is a USS.

19. A first node for mobility management in a core network, the first node comprising:
management means for managing a User Equipment (UE) context, the UE context indicating that the UE has failed Uncrewed Aerial Vehicle (UAV) authentication and authorization in the mobility management;
reception means for receiving from the UE a first message including a PDU SESSION ESTABLISHMENT REQUEST message, the first message including at least one of a Data Network Name (DNN) for a Uncrewed Aerial System (UAS) service and Single Network Slice Selection Assistance Information (S-NSSAI) for the UAS service; and
transmission means for transmitting to the UE a second message including a failure cause without transmitting the PDU SESSION ESTABLISHMENT REQUEST message to a second node for session management in the core network based on at least one of the DNN and the S-NSSAI and the UE context.

20. The first node according to claim 19, wherein the failure cause indicates a failure of the UAV authentication and authorization in the mobility management.

21. The first node according to claim 19, wherein the first message is a DL NAS transport message and the second message is a UL NAS transport message.

22. The first node according to claim 19, wherein
the UE is in a RM-REGISTERED state, and
the UE context indicates that the UE has failed the UAV authentication and authorization in the mobility management by the time the UE context is generated.

23. A User Equipment (UE) comprising:
transmission means for transmitting to a first node in mobility management in a core network a first message including a PDU SESSION ESTABLISHMENT REQUEST message after Uncrewed Aerial Vehicle (UAV) authentication and authorization fails in the mobility management, the first message including at least one of a Data Network Name (DNN) for a Uncrewed Aerial System (UAS) service and Single Network Slice Selection Assistance Information (S-NSSAI) for the UAS service; and
reception means for receiving from the first node a second message including a failure cause without transmitting the PDU SESSION ESTABLISHMENT REQUEST message from the first node to a second node in the mobility management in the core network based on at least one of the DNN and the S-NSSAI and a UE context indicating that the UE has failed the UAV authentication and authorization.

24. The UE according to claim 23, wherein the failure cause indicates a failure of the UAV authentication and authorization in the mobility management.

25. The UE according to claim 23, wherein the first message is a DL NAS transport message and the second message is a UL NAS transport message.

26. The UE according to claim 23, wherein
the UE is in a RM-REGISTERED state, and
the UE context indicates that the UE has failed the UAV authentication and authorization in the mobility management by the time the UE context is generated.

27. A method performed by a first node for mobility management in a core network, the method comprising:
managing a User Equipment (UE) context, the UE context indicating that the UE has failed Uncrewed Aerial Vehicle (UAV) authentication and authorization in the mobility management;
receiving from the UE a first message including a PDU SESSION ESTABLISHMENT REQUEST message, the first message including at least one of a Data Network Name (DNN) for a Uncrewed Aerial System (UAS) service and Single Network Slice Selection Assistance Information (S-NSSAI) for the UAS service; and
transmitting a second message including a failure cause without transmitting to a second node for session management in the core network the PDU SESSION ESTABLISHMENT REQUEST message based on at least one of the DNN and the S-NSSAI and the UE context.

28. The method according to claim 27, wherein the failure cause indicates a failure of the UAV authentication and authorization in the mobility management.

29. The method according to claim 27, wherein the first message is a DL NAS transport message and the second message is a UL NAS transport message.

30. The method according to claim 27, wherein
the UE is in a RM-REGISTERED state, and
the UE context indicates that the UE has failed the UAV authentication and authorization in the mobility management by the time the UE context is generated.

31. A method performed by a User Equipment (UE), the method comprising:
transmitting to a first node for mobility management in a core network a first message including a PDU SESSION ESTABLISHMENT REQUEST message after Uncrewed Aerial Vehicle (UAV) authentication and authorization fails in the mobility management, the first message including at least one of a Data Network Name (DNN) for a Uncrewed Aerial System (UAS) service and Single Network Slice Selection Assistance Information (S-NSSAI) for the UAS service; and
receiving from the first node a second message including a failure cause without transmitting the PDU SESSION ESTABLISHMENT REQUEST message from the first node to a second node for session management in the core network based on at least one of the DNN and the S-NSSAI and a UE context indicating that the UE has failed the UAV authentication and authorization.

32. The method according to claim 31, wherein the failure cause indicates a failure of the UAV authentication and authorization in the mobility management.

33. The method according to claim 31, wherein the first message is a DL NAS transport message and the second message is a UL NAS transport message.

34. The method according to claim 31, wherein
the UE is in a RM-REGISTERED state, and
the UE context indicates that the UE has failed the UAV authentication and authorization in the mobility management by the time the UE context is generated.
